(19) Europäisches Patentamt
European Patent Office
Office européen des brevets

(11) EP 3 767 245 B1

(12) **EUROPEAN PATENT SPECIFICATION**

(45) Date of publication and mention of the grant of the patent:
**19.10.2022 Bulletin 2022/42**

(21) Application number: **18916293.6**

(22) Date of filing: **24.04.2018**

(51) International Patent Classification (IPC):
***G01D 21/00*** *(2006.01)* ***G01C 19/00*** *(2013.01)*
***G01P 21/00*** *(2006.01)*

(52) Cooperative Patent Classification (CPC):
**G01D 3/08; G01C 21/165; G01D 21/00; G01P 21/00; G06F 21/566; G06F 21/567**

(86) International application number:
**PCT/JP2018/016648**

(87) International publication number:
**WO 2019/207653 (31.10.2019 Gazette 2019/44)**

# (54) ATTACK DETECTION DEVICE, ATTACK DETECTION METHOD, AND ATTACK DETECTION PROGRAM

ANGRIFFSDETEKTIONSVORRICHTUNG, ANGRIFFSDETEKTIONSVERFAHREN UND ANGRIFFSDETEKTIONSPROGRAMM

DISPOSITIF, PROCÉDÉ ET PROGRAMME DE DÉTECTION D'ATTAQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.01.2021 Bulletin 2021/03**

(73) Proprietor: **Mitsubishi Electric Corporation**
**Tokyo 100-8310 (JP)**

(72) Inventors:
- **NASHIMOTO, Shoei**
**Tokyo 100-8310 (JP)**
- **SUZUKI, Daisuke**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
**EP-A1- 3 239 884**
**WO-A1-2018/055748**
**US-A1- 2017 094 527**
**WO-A1-2018/055748**
**JP-A- 2004 250 161**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to an attack detection device, an attack detection method, and an attack detection program.

### Background Art

A micro-electro-mechanical system (MEMS) sensor is a sensor configured such that mechanical parts and an electronic circuit are integrated into one unit.

MEMS sensors are often used due to their small size, high accuracy, and low cost.

For example, MEMS gyroscope sensors and MEMS acceleration sensors are used for autonomous control of self-driving vehicles or devices such as robots.

In measurement and control using a sensor, the reliability of sensor data is directly linked to the reliability of a system. Therefore, an attack on the sensor is a threat. An attack that disguises sensor data in software using malware can be dealt with by existing information security technologies.

On the other hand, an attack that deceives in hardware by exposing the sensor to a physical signal to physically vary the state of the sensor cannot be dealt with only by existing information security technologies.

Non-Patent Literature 1 and Non-Patent Literature 2 disclose attack methods that deceive a MEMS gyroscope sensor and a MEMS acceleration sensor, respectively, by ultrasonic waves.

An acoustic wave attack focuses on the fact that a MEMS sensor is composed of a spring and a weight. That is, it leverages the property that an object composed of a spring and a weight has a resonance frequency.

An attacker exposes the MEMS sensor to acoustic waves having the same frequency as the resonance frequency of the MEMS sensor. This exposure forces the mechanical part of the MEMS sensor to resonate, and abnormal sensor data is output from the sensor.

The following countermeasures are available as countermeasures against acoustic wave attacks on MEMS sensors.

Non-Patent Literature 1 discloses, as countermeasure methods, physically shielding a sensor, changing the resonance frequency of the sensor, and providing a plurality of sensors of the same type and comparing sensor data, as countermeasures in hardware.

Non-Patent Literature 2 discloses a countermeasure method of replacing the parts constituting a sensor with parts that are less susceptible to ultrasonic attacks, as a countermeasure in hardware. Furthermore, Non-Patent Literature 2 discloses a countermeasure method of changing the sampling interval of the sensor, as a countermeasure in software.

EP 3 239 884 A1 discloses that a model creation computer may generate sets of normal and threatened feature vectors. The computer may also calculate and output at least one decision boundary for a threat detection model based on the normal and threatened feature vectors. The plurality of threat nodes may then generate a series of current values from threat nodes that represent a current operation of the asset control system. A threat detection computer may receive the series of current values from threat nodes, generate a set of current feature vectors, execute the threat detection model, and transmit a threat alert signal based on the current feature vectors and at least one decision boundary.

WO 2018/055748 A1 discloses that when a measurement signal, indicating a physical state measured by a passive sensor, is received from the passive sensor after a modulated actuator control signal, which is the actuator control signal that has been modulated by the signal modulation unit, is transmitted to the actuator, a correlation calculation unit calculates the correlation between the received measurement signal and the modulation signal used by the signal modulation unit to modulate the actuator control signal.

### Citation List

#### Non-Patent Literature

Non-Patent Literature 1: Son, Yunmok, et al. "Rocking drones with intentional sound noise on gyroscopic sensors." 24th USENIX Security Symposium (USENIX Security 15). 2015.

Non-Patent Literature 2: Timothy Trippel, Ofir Weisse, Wenyuan Xu, Peter Honeyman, and Kevin Fu. 2017. WALNUT: Waging doubt on the integrity of mems accelerometers with acoustic injection attacks. In Security and Privacy (EuroS&P), 2017 IEEE European Symposium on. IEEE, 3-18.

## Summary of Invention

### Technical Problem

Although Non-Patent Literature 1 and Non-Patent Literature 2 disclose some countermeasures against acoustic wave attacks on MEMS sensors, these countermeasures have the following drawbacks.

The countermeasure methods in hardware require that the sensor itself be modified or a plurality of sensors be provided, thereby increasing costs.

The method of shielding the sensor may affect other sensors, and the method of shielding the sensor may adversely affect measurement performance.

In addition, if the hardware configuration cannot be changed, the countermeasures in hardware cannot be implemented.

A problem of the countermeasure method in software disclosed in Non-Patent Literature 2 is that it can be applied only to limited sensors. This is because it is a prerequisite for applying this countermeasure method that a user of the sensor can set the sampling interval of the sensor.

It is an object of the present invention to provide an attack detection device that detects an attack on a sensor and can be used within the scope of normal use of the sensor without requiring modification to the sensor itself.

### Solution to Problem

The present invention is as defined in the appended set of claims. An attack detection device according to the present invention includes, inter alia:

a characteristic detection unit to treat sensor data detected by a sensor as a waveform of time-series data, and detect in the waveform of the sensor data a corresponding characteristic corresponding to a reference characteristic, the characteristic detection unit detecting the corresponding characteristic for each of a plurality of reference characteristics of respectively different types; and
an attack determination unit to determine presence or absence of an attack on the sensor, based on a plurality of corresponding characteristics, each detected for a corresponding one of the plurality of reference characteristics.

### Advantageous Effects of Invention

According to the present invention, it is possible to provide an attack detection device that detects an attack on a sensor and can be used within the scope of normal use of the sensor without requiring modification to the sensor itself.

### Brief Description of Drawings

Fig. 1 is a diagram of a first embodiment and is a diagram illustrating a configuration of an attack detection system;
Fig. 2 is a diagram of the first embodiment and is a diagram illustrating a hardware configuration of an attack detection device;
Fig. 3 is a diagram of the first embodiment and is a diagram illustrating waveforms detected by the attack detection device;
Fig. 4 is a diagram of the first embodiment and is a diagram illustrating the relationship between a high frequency detection unit and a low-pass filter;
Fig. 5 is a diagram of the first embodiment and is a sequence diagram illustrating operation of the attack detection system;
Fig. 6 is a diagram of the first embodiment and is a flowchart illustrating operation of an attack determination unit;
Fig. 7 is a diagram of the first embodiment and is a diagram illustrating realization of the attack detection device by an electronic circuit;
Fig. 8 is a diagram of a second embodiment and is a diagram illustrating a configuration of the attack detection system;
Fig. 9 is a diagram of the second embodiment and is a diagram illustrating a hardware configuration of the attack detection device;
Fig. 10 is a diagram of the second embodiment and is a state transition diagram based on which a state transition detection unit determines a state transition;
Fig. 11 is a diagram of the second embodiment and is context determination information indicating criteria according to which a context determination unit determines a context;

Fig. 12 is a diagram of the second embodiment and is a sequence diagram illustrating operation of the attack detection system;

Fig. 13 is a diagram of the second embodiment and is a flowchart illustrating operation of the context determination unit;

Fig. 14 is a diagram of the second embodiment and is a flowchart illustrating operation of the state transition detection unit;

Fig. 15 is a diagram of the second embodiment and is a flowchart illustrating operation of the attack detection unit; and

Fig. 16 a diagram of the second embodiment and is a diagram illustrating correspondence information for changing threshold values, depending on a context.

## Description of Embodiments

First Embodiment

*** Description of Configurations ***

Fig. 1 illustrates a configuration of an attack detection system 10 of a first embodiment. The attack detection system 10 includes an attack detection device 100, a MEMS sensor 200, and a controller 300. The attack detection device 100 includes a characteristic detection unit 110 and an attack determination unit 120. The characteristic detection unit 110 includes a high frequency detection unit 111, an amplitude change detection unit 112, a periodic change detection unit 113, an abrupt change detection unit 114, a bias detection unit 115, and a single sine wave detection unit 116. The attack determination unit 120 includes a threshold value counter 122.

Each of the high frequency detection unit 111, the amplitude change detection unit 112, the periodic change detection unit 113, the abrupt change detection unit 114, the bias detection unit 115, and the single sine wave detection unit 116 may be denoted simply as a detection unit.

Fig. 1 illustrates a configuration in which the attack detection device 100 is connected with the MEMS sensor 200 and the controller 300.

Fig. 2 illustrates a hardware configuration of the attack detection device 100. The attack detection device 100 is a computer. The attack detection device 100 includes, as hardware, a processor 910, a memory 920, a sensor data input interface 930, and an attack determination result output interface 940. The processor 910 includes, as functional components, the characteristic detection unit 110 and the attack determination unit 120. The characteristic detection unit 110 is composed of functional elements of the high frequency detection unit 111, the amplitude change detection unit 112, the periodic change detection unit 113, the abrupt change detection unit 114, the bias detection unit 115, and the single sine wave detection unit 116. The functions of the characteristic detection unit 110 and the attack determination unit 120 are implemented as a program. The memory 920 stores an attack detection program that implements the functions of the characteristic detection unit 110 and the attack determination unit 120. The processor 910 executes the attack detection program that implements the functions of the characteristic detection unit 110 and the attack determination unit 120. The attack detection program may be stored and provided in a computer readable recording medium, or may be provided as a program product.

A plurality of MEMS sensors 200 may be connected to the attack detection device 100. The number of detection units that are included in the characteristic detection unit 110 and detect attack characteristics is not limited to six units. Other detection units may be added, or one or more of the six detection units of the high frequency detection unit 111 to the single sine wave detection unit 116 may be omitted.

*** Description of Operation ***

Operation of the attack detection device 100 will be described. The operation of the attack detection device 100 corresponds to an attack detection method. The operation of the attack detection device 100 also corresponds to processes of the attack detection program.

The attack detection device 100 is characterized in that when an attack is performed on the MEMS sensor 200, an attack characteristic that occurs in sensor data is detected as a time-series change.

Fig. 3 illustrates types of sensor data that are obtained from a MEMS acceleration sensor and a MEMS gyroscope sensor when the MEMS acceleration sensor in a stationary state and the MEMS gyroscope sensor in a stationary state are exposed to acoustic waves. Each of the MEMS acceleration sensor and the MEMS gyroscope sensor includes a spring and a weight. Fig. 3 illustrates graphs of eight types of sensor data that are obtained when the MEMS acceleration sensor or the MEMS gyroscope sensor in a stationary state is exposed to acoustic waves.

In each of the eight graphs, the horizontal axis is time and the vertical axis is the signal value.

In (a) bias, bias is included in sensor data.

In (b) sine wave, a high frequency sine wave is included in sensor data.

In (c) sine wave, a low frequency sine wave is included in sensor data.

In (d) AM modulation, sensor data is AM modulated.

In (e) FM modulation, sensor data is FM modulated.

In (f) AM modulation & FM modulation, sensor data is AM modulated and FM modulated.

In (g) ASK modulation, sensor data is ASK modulated.

In (h) PSK modulation, sensor data is PSK modulated.

The attack detection device 100 aims to detect attack characteristics of (a) bias to (h) PSK modulation illustrated in Fig. 3. To do so, the attack detection device 100 has the characteristic detection unit 110 that is composed of a plurality of detection units and the attack determination unit 120 that determines the presence or absence of an attack on the MEMS sensor 200 based on detection results of the detection units. An attack on the MEMS sensor 200 may be referred to simply as an attack.

The attack detection device 100 has the following advantages. The attack detection device 100 has a plurality of detection units that detect attacks, such as the high frequency detection unit 111 to the single sine wave detection unit 116. Therefore, the attack detection device 100 can complementarily detect attack characteristics that cannot be detected by only a single detection unit. In addition, in the attack detection device 100, the attack determination unit 120 determines the presence of an attack based on the detection results of the plurality of detection units, so that false detections are reduced. As will be described later, the attack determination unit 120 determines the presence of an attack by calculating the sum of weighted detection results and comparing it with a threshold value.

The detection units included in the characteristic detection unit 110 of the attack detection device 100 will be described below. Time-series data of sensor data may hereinafter be referred to as a "waveform".

The high frequency detection unit 111 will be described first. The detection of a characteristic in sensor data by the high frequency detection unit 111 focuses on the fact that the amplitude of time-series data of sensor data fluctuates abnormally rapidly when the MEMS sensor 200 is attacked. The high frequency detection unit 111 detects, as a characteristic, a high-frequency characteristic in sensor data.

As specific methods for detecting a high frequency by the high frequency detection unit 111, the following two methods may be considered. One method is to cut out sensor data using a certain time window and compare waveforms before and after passing through a low-pass filter. The low-pass filter may be provided in the high frequency detection unit 111 as a program. Alternatively, as illustrated in Fig. 4, the attack detection device 100 may include a low-pass filter 960, which is hardware, and a waveform before passing through the low-pass filter 960 and a waveform after passing through the low-pass filter 960 may be input to the high frequency detection unit 111. When a high frequency is not included in a waveform, the waveform will look very similar even after passing through the low-pass filter. Correlation is a type of similarity.

The Pearson correlation coefficient is one method for measuring a similarity between two waveforms. The Pearson correlation coefficient for two series xi and yi (i = 1, 2, ..., n) can be obtained by the following formula.

[Formula 1]

$$\text{correlation} = \frac{\sum_{i=1}^{n}(x_i - \bar{x})(y_i - \bar{y})}{\sqrt{(\sum_{i=1}^{n}(x_i - \bar{x})^2)(\sum_{i=1}^{n}(y_i - \bar{y})^2)}}$$

Note that

[Formula 2]

$$\bar{x},\ \bar{y}$$

are the arithmetic averages of xi and yi, respectively.

The other specific method for detecting a high frequency by the high frequency detection unit 111 is to cut out a waveform using a time window and perform an FFT so as to convert time-domain data to frequency-domain data and directly detect a high-frequency component.

The high frequency detection unit 111 can detect (b), (d), (e), (f), and (g) among the waveforms at the time of an attack in Fig. 3. The high frequency detection unit 111 cannot detect (c) with a low frequency and (a) in which the value is nearly fixed. Regarding (f) and (h), the high frequency detection unit 111 may or may not be able to detect a high frequency, depending on the frequency of the carrier wave.

The amplitude change detection unit 112 will now be described. The characteristic detection by the amplitude change detection unit 112 focuses on the fact that the amplitude of a waveform appears to be constant when the waveform is viewed over a long duration. The amplitude change detection unit 112 detects, as a characteristic, a constant change in the amplitude of the waveform. A specific detection method by the amplitude change detection unit 112 is to draw an envelope on the waveform over a long duration and observe a change therein. This allows a change over time in amplitude peak to be observed. Therefore, the amplitude change detection unit 112 can detect that a change in amplitude is nearly constant when the width of the change over time in amplitude peak is small. The amplitude change detection unit 112 can detect (a), (b), (e), and (h) among the waveforms at the time of an attack in Fig. 3. The amplitude change detection unit 112 cannot detect (c) with a low frequency, and (d), (g), and (f) with amplitude modulation. Regarding (e) and (h), detection may be or may not be possible, depending on the range of frequency fluctuation (frequency shift) and the frequency of the carrier wave.

The periodic change detection unit 113 will be described. The characteristic detection by the periodic change detection unit 113 focuses on the fact that a waveform at the time of an attack changes with a certain period. The periodic change detection unit 113 detects, as a characteristic, a periodic change in a waveform. One method for checking the periodicity of a waveform is an autocorrelation coefficient. The autocorrelation coefficient for a series xi (i = 1, 2, ..., n) can be obtained by the following formula.

[Formula 3]

$$\text{autocorrelation}(j) = \sum_{i=1}^{n} (x_i\, \bar{x}_{i-j})$$

Note that j is a shift width of the series. When a high autocorrelation coefficient is observed with regard to a given shift width j, this indicates that the waveform has a high similarity at intervals of the given shift width j. That is, the waveform can be regarded as a regular waveform whose period is j. Therefore, if a high autocorrelation coefficient is observed, the presence of an attack may be determined.

The periodic change detection unit 113 can detect (a), (b), (c), (d), (e), and (g) among the waveforms at the time of an attack in Fig. 3. In (f) and (h), regularity is not maintained, so that (f) and (h) cannot be detected. Since (c) has a low frequency, (c) may not be able to be detected, depending on the size of the time window that determines the series for which an autocorrelation coefficient is calculated. Regarding (g), detection may not be possible, depending on the length of the period, as in the case of (c).

The abrupt change detection unit 114 will be described. The detection by the abrupt change detection unit 114 focuses on the fact that a waveform changes abruptly upon the start of an attack. The abrupt change detection unit 114 detects, as a characteristic, an abrupt change in the waveform. A specific detection method is that the abrupt change detection unit 114 records a change in frequency or a change in amplitude. When observing a change in amplitude, the abrupt change detection unit 114 compares sensor data values at regular time intervals. The presence of an attack may be determined if a significant change is observed.

When observing a change in frequency, the abrupt change detection unit 114 performs a fast Fourier transform (FFT) at regular time intervals to acquire a peak frequency. The presence of an attack may be determined if there is an abrupt change in the peak frequency. The abrupt change detection unit 114 can detect (a), (b), (c), (d), (e), (g), and (h) among the waveforms at the time of an attack in Fig. 3. The abrupt change detection unit 114 cannot detect (f) in which both the amplitude and the frequency change.

The bias detection unit 115 will now be described. The detection by the bias detection unit 115 focuses especially on an attack that causes bias to be output. The bias detection unit 115 detects, as a characteristic, bias in a waveform. As specific detection methods by the bias detection unit 115, the following two methods may be considered. One method is to monitor the average and variance of the waveform. When the average is far from 0 and the variance is close to 0, it can be seen that constant values are output from the MEMS sensor 200 as the waveform. In other words, it can be seen that there is bias. Therefore, the presence or absence of bias can be determined from results of comparing each of the average and the variance with 0. The other method is to monitor a change in the amplitude of the waveform. When a change in the amplitude of the waveform is small, it can be known that there is bias. Therefore, if there are two sets of sensor data at a certain time t and the next time series t+1, a change in the amplitude of the waveform can be known. The presence or absence of bias can be determined by comparing the change in the amplitude with a certain threshold value.

The bias detection unit 115 can detect (a) among the waveforms at the time of an attack in Fig. 3. The other waveforms without bias cannot be detected.

The single sine wave detection unit 116 will now be described. The detection by the single sine wave detection unit 116 focuses on the fact that since the MEMS sensor 200 is forcibly resonated, a frequency in accordance with the resonance frequency continues to be superposed. That is, there is a characteristic that regular sine waves continue to be superposed as in (b), (c), (d), (g), and (h) illustrated in Fig. 3. A specific detection method is to perform an FFT on the waveform and monitor whether a specific frequency continues to be superposed. For example, by monitoring the three highest frequency peaks after the FFT, it can be known whether a certain frequency continues to be superposed. A frequency peak caused by an accidental change in the monitoring target of the sensor will disappear over time, so that it can be distinguished from an attack. The single sine wave detection unit 116 can detect (b), (c), (d), (g), and (h) among the waveforms at the time of an attacks in Fig. 3. It is not possible to detect (e) and (f) in which the frequency changes and (a) composed of a plurality of frequencies. Detection of (c) may not also be possible, depending on the magnitude of the frequency.

Fig. 5 is a sequence diagram illustrating operation of the attack detection system 10. Referring to Fig. 5, the operation of the attack detection system 10 will be described. In Fig. 5, each of the detection units generates a detection result and transmits the detection result to the attack determination unit 120.

The characteristic detection unit 110 treats sensor data detected by the sensor as a waveform of time-series data, and for each reference characteristic of a plurality of reference characteristics of respectively different types, detects in the waveform of the sensor data a corresponding characteristic corresponding to the reference characteristic. A reference characteristic is a characteristic to be detected in the waveform of the sensor data. A corresponding characteristic is a characteristic corresponding to one reference characteristic of the plurality of different reference characteristics. In the following, a corresponding characteristic is a detection result. The characteristic detection unit 110 generates each corresponding characteristic as a score indicating a degree of matching with the reference characteristic corresponding to the corresponding characteristic. That is, in the first embodiment, a detection result, which is a corresponding characteristic, is a detection score indicating to what degree the waveform matches the reference characteristic set as an attack characteristic.

(1) The high frequency detection unit 111 of the characteristic detection unit 110 detects, as a corresponding characteristic, a frequency characteristic in the waveform indicated by the sensor data. In the high frequency detection unit 111, the reference characteristic is a high frequency, and a similarity is used as a detection result 11, which is a corresponding characteristic.
(2) The amplitude change detection unit 112 of the characteristic detection unit 110 detects, as a corresponding characteristic, an amplitude change characteristic in the waveform indicated by the sensor data. In the amplitude change detection unit 112, the reference characteristic is a constant change in amplitude, and the width of a change over time in amplitude peak is used as a detection result 12, which is a corresponding characteristic.
(3) The periodic change detection unit 113 of the characteristic detection unit 110 detects, as a corresponding characteristic, a periodic change in the waveform indicated by the sensor data. In the periodic change detection unit 113, the reference characteristic is a periodic change, and an autocorrelation coefficient is used as a detection result 13, which is a corresponding characteristic.
(4) The abrupt change detection unit 114 of the characteristic detection unit 110 detects, as a corresponding characteristic, an abrupt change in the waveform indicated by the sensor data. In the abrupt change detection unit 114, the reference characteristic is an abrupt change, and an autocorrelation coefficient is used as a detection result 14, which is a corresponding characteristic.
(5) The bias detection unit 115 of the characteristic detection unit 110 detects, as a corresponding characteristic, bias in the waveform indicated by the sensor data. In the bias detection unit 115, the reference characteristic is bias, and the average of the waveform is used as a detection result 15, which is a corresponding characteristic.
(6) The single sine wave detection unit 116 of the characteristic detection unit 110 detects, as a corresponding characteristic, continued superposition of sine waves. In the single sine wave detection unit 116, the reference characteristic is superposition of single sine waves, and a period of time during which superposition of certain frequencies continues is used as a detection result 16, which is a corresponding characteristic.
(7) As will be described later, the detection results 11 to 16 are compared with corresponding threshold values.

In step S01, the MEMS sensor 200 transmits sensor data 201 to the controller 300. The controller 300 performs processing corresponding to the sensor data 201.

In step S02, the MEMS sensor 200 transmits the sensor data 201 to the high frequency detection unit 111. The high frequency detection unit 111 detects whether a high frequency is included in the sensor data 201, and transmits the detection result 11 to the attack determination unit 120.

In step S03, the MEMS sensor 200 transmits the sensor data 201 to the amplitude change detection unit 112. The amplitude change detection unit 112 detects whether a change in the amplitude of the sensor data 201 is constant, and transmits the detection result 12 to the attack determination unit 120.

In step S04, the MEMS sensor 200 transmits the sensor data 201 to the periodic change detection unit 113. The periodic change detection unit 113 detects whether a change over time of the sensor data 201 is periodic, and transmits the detection result 13 to the attack determination unit 120.

In step S05, the MEMS sensor 200 transmits the sensor data 201 to the abrupt change detection unit 114. The abrupt change detection unit 114 detects whether the sensor data 201 changes abruptly, and transmits the detection result 14 to the attack determination unit 120.

In step S06, the MEMS sensor 200 transmits the sensor data 201 to the bias detection unit 115. The bias detection unit 115 detects whether bias is included in the sensor data 201, and transmits the detection result 15 to the attack determination unit 120.

In step S07, the MEMS sensor 200 transmits the sensor data 201 to the single sine wave detection unit 116. The single sine wave detection unit 116 detects whether single sine waves continue to be superposed in the sensor data 201, and transmits the detection result 16 to the attack determination unit 120.

The attack determination unit 120 determines the presence or absence of an attack on the sensor based on a plurality of corresponding characteristics detected with regard to the reference characteristics. The attack determination unit 120 detects the presence or absence of an attack on the sensor, using scores indicating the respective corresponding characteristics. That is, the attack determination unit 120 determines the presence or absence of an attack based on the detection results 11 to 16, using thresholds as will be described later.

In step S08, the attack determination unit 120 transmits a determination result 121 to the controller 300.

The controller 300 performs processing depending on the determination result 121 received from the attack determination unit 120.

Fig. 6 is a flowchart illustrating operation of the attack determination unit 120. Referring to Fig. 6, the operation of the attack determination unit 120 will be described.

In step S11, the attack determination unit 120 resets the threshold value counter 122 for determining the presence or absence of an attack.

In step S12, the attack determination unit 120 receives a detection result. This detection result is one of the detection results 11 to 16.

In step S13, the attack determination unit 120 compares the received detection result with a threshold value corresponding to the received detection result.

The threshold values will now be described. The attack determination unit 120 has two types of threshold values. One type of threshold value is a threshold value for being compared with a detection result by the detection unit. The other type of threshold value is a threshold value for being compared with the value of the threshold value counter 122. As the former type of threshold value, there are threshold values 1 to 6 below.

The threshold value 1 is compared with the detection result 11 of the high frequency detection unit 111.

The threshold value 2 is compared with the detection result 12 of the amplitude change detection unit 112.

The threshold value 3 is compared with the detection result 13 of the periodic change detection unit 113.

The threshold value 4 is compared with the detection result 14 of the abrupt change detection unit 114.

The threshold value 5 is compared with the detection result 15 of the bias detection unit 115.

The threshold value 6 is compared with the detection result 16 of the single sine wave detection unit 116.

In step S14, if the detection result exceeds the threshold value, the attack determination unit 120 increments the threshold value counter 122. With the configuration of Fig. 1, since there are six detection units to detect attack characteristics, the threshold value counter 122 becomes 0 at the minimum and 6 at the maximum.

That the detection result exceeds the threshold, which is a condition for incrementing the threshold value counter 122, signifies the following.

(1) Regarding the detection result 11 indicating a similarity related to a high-frequency component, the similarity is larger than the threshold value 1.

(2) Regarding the detection result 12 indicating the width of a change over time in peak related to constant amplitude, the width of the change over time in peak is smaller than the threshold value 2.

(3) Regarding the detection result 13 indicating an autocorrelation coefficient related to a periodic change, the autocorrelation coefficient is larger than the threshold value 3.

(4) Regarding the detection result 14 indicating a change in amplitude per unit time related to an abrupt change, the change in amplitude per unit time is larger than the threshold value 4.

(5) Regarding the detection result 15 related to bias, the average value of the waveform is larger than the threshold value 5.

(6) Regarding the detection result 16 related to single sine waves, the period of time during which superposition of given frequencies continues is larger than the threshold value 6.

In step S15, the attack determination unit 120 checks whether all the detection results have been compared with the threshold values. If the result of step S15 is NO, the process proceeds to step S13.

If the result of step S15 is YES, the process proceeds to step S16.

In step S16, the attack determination unit 120 determines the presence or absence of an attack. If the value of the threshold value counter 122 exceeds the counter threshold value for determining the presence of an attack, the attack determination unit 120 determines the presence of an attack. In this case, the attack determination unit 120 transmits an anomaly notification as the determination result 121 to the controller 300 in step S17.

If the threshold value counter 122 does not exceed the counter threshold value, the attack determination unit 120 determines the absence of an attack. In this case, the attack determination unit 120 transmits a normal-state notification as the determination result 121 to the controller 300 in step S18.

A supplementary description of the high frequency detection unit 111 will be provided. It has been described that when detecting a high frequency by comparison between waveforms before and after passing through the low-pass filter, the high frequency detection unit 111 uses the Pearson correlation coefficient for calculating a similarity between the waveform before passing through the low-pass filter and the waveform after passing through the low-pass filter. Instead of the Pearson correlation coefficient, the following similarity calculation methods (1) and (2) may be used.

(1) The similarity calculation method is to calculate mutual correlations, correlation information amounts, or likelihoods.

(2) The similarity calculation method is to calculate geometric distances, such as the Euclidean distance, the Mahalanobis distance, the Manhattan distance, the Chebyshev distance, and the Minkowski distance.

In the attack determination unit 120, the threshold value counter 122 may be realized by the following method, taking into consideration the target to be observed by the sensor. Weighting is performed individually for each detection unit, or the threshold value itself is changed. The attack determination unit 120 weights a score that indicates a corresponding characteristic, depending on the type of the reference characteristic corresponding to the corresponding characteristic, and determines the presence or absence of an attack on the sensor based on the weighted score. Depending on the type of the reference characteristic signifies depending on the type of the detection unit. Weighting of a score may be done by changing the value of a detection result, changing the threshold value to be compared with a detection result, or changing the counter threshold value.

For example, with a MEMS acceleration sensor or a MEMS gyroscope sensor attached to a robot arm that performs regular movements, the threshold value to be compared with the detection result 13 obtained from the periodic change detection unit 113 is increased so as to lower the importance.

*** Description of Effects of First Embodiment ***

When there is an attack on the MEMS sensor 200, the waveform of the MEMS sensor 200 exhibits attack characteristics, such as a high frequency, constant amplitude, a periodic change, an abrupt change, bias, and superposition of single sine waves. In the attack detection device 100 of the first embodiment, these characteristics are detected by the six detection units, so that an attack on the MEMS sensor 200 can be detected.

In addition, the attack detection device 100 requires only input of sensor data of the sensor for which an attack is to be detected, so that no modification to the sensor itself is required.

In addition, the attack detection device 100 can be used for many types of sensors, not limited to the MEMS sensor 200.

The hardware configuration of the attack detection device 100 has been described with reference to Fig. 2. A supplementary description of the hardware configuration will be provided.

The processor 910 is a central processing unit (CPU) or a digital signal processor (DSP). The memory 920 is a random access memory (RAM), a read only memory (ROM), a flash memory, a hard disk drive (HDD), or a solid state drive (SSD). Each of the sensor data input interface 930 and the attack determination result output interface 940 is an Inter-Integrated Circuit (I2C) interface, a Serial Peripheral Interface (SPI), or an Ethernet (registered trademark) interface.

The "unit" of each of the high frequency detection unit 111, the amplitude change detection unit 112, the periodic change detection unit 113, the abrupt change detection unit 114, the bias detection unit 115, the single sine wave detection unit 116, and the attack determination unit 120 may be interpreted as a "circuit", "step", "procedure", or "process". The attack detection device 100 may be realized by an electronic circuit, such as a logic integrated circuit (IC), a gate array (GA), an application specific integrated circuit (ASIC), or a field-programmable gate array (FPGA).

The processor and the above electronic circuit are also collectively referred to as processing circuitry.

Fig. 7 is a diagram illustrating realization of the attack detection device 100 by an electronic circuit 99. The functions of the "units" illustrated as the processor 910, the function of the memory 920, the function of the sensor data input interface 930, and the function of the attack determination result output interface 940 are realized by the electronic circuit 99. The electronic circuit 99 is connected to a signal line 99a. Specifically, the electronic circuit 99 is a single circuit, a composite circuit, a programmed processor, a parallel-programmed processor, a logic IC, a gate array (GA), an application specific integrated circuit (ASIC), or a field-programmable gate array (FPGA).

Second Embodiment

*** Description of Configurations ***

Referring to Figs. 8 to 16, an attack detection system 700 of a second embodiment will be described.

Fig. 8 illustrates a configuration of the attack detection system 700 of the second embodiment. The attack detection system 700 includes the attack detection device 100, a control target 500 and a control system 600.

The attack detection device 100 includes the characteristic detection unit 110, the attack determination unit 120, a context determination unit 130, and a state transition detection unit 140. The attack detection device 100 of the second embodiment further includes the context determination unit 130 and the state transition detection unit 140 in addition to the components of the attack detection device 100 of the first embodiment.

The control system 600 includes the MEMS sensor 200, the controller 300, and an actuator 400. The control system 600 performs feedback control on the control target 500.

The attack detection system 700 is configured such that the attack detection device 100 is connected to the control system 600.

Fig. 9 illustrates a hardware configuration of the attack detection device 100. The attack detection device 100 of the second embodiment is a computer. The attack detection device 100 includes, as hardware, the processor 910, the memory 920, the sensor data input interface 930, the attack determination result output interface 940, and a control signal input interface 950. The processor 910 includes, as functional elements, the characteristic detection unit 110, the attack determination unit 120, the context determination unit 130, and the state transition detection unit 140. The functions of the characteristic detection unit 110, the attack determination unit 120, the context determination unit 130, and the state transition detection unit 140 are implemented as the attack detection program. The memory 920 stores the attack detection program that implements the functions of the characteristic detection unit 110, the attack determination unit 120, the context determination unit 130, and the state transition detection unit 140. The processor 910 executes the attack detection program that implements the functions of the characteristic detection unit 110, the attack determination unit 120, the context determination unit 130, and the state transition detection unit 140.

A plurality of MEMS sensors 200 may be connected to the attack detection device 100. The characteristic detection unit 110 may be composed of the plurality of detection units as described in the first embodiment. Alternatively, the characteristic detection unit 110 may be composed of one detection unit or two or more detection units of the plurality of detection units. The attack detection device 100 may be realized as a component of the controller 300 constituting the control system 600. When the control system 600 does not have an actuator, the context determination unit 130 may determine a context based only on the sensor data 201.

*** Description of Operation ***

Operation of the attack detection device 100 of the second embodiment will be described. The attack detection device 100 further includes the context determination unit 130 and the state transition detection unit 140 in addition to the components of the attack detection device 100 of the first embodiment, and can detect an attack on the MEMS sensor 200, taking into consideration a state of the control target 500.

A context signifies a state of the control target 500.

Fig. 10 is a state transition diagram of the state transition detection unit for determining a state transition. For example, when the control target 500 is a mobile robot, four states of stationary, acceleration, deceleration, and constant velocity may be considered, as illustrated in Fig. 10.

Context determination has two effects. One effect is that false detections can be reduced by changing the detection criteria and determination criteria of the characteristic detection unit 110 and the attack determination unit 120, depending on the context. For example, when the control target 500 is a robot, sensor data changes abruptly at the start of moving, so that a detection score, which is a detection result, of the abrupt change detection unit 114 may be decreased. Alternatively, the threshold value to be compared with a detection result of the abrupt change detection unit 114 may be decreased.

Another effect of context determination is that an abnormal context state is detected and used for attack determination.

There are two methods for detecting an abnormal context state.

One method detects an abnormal context state based on an inconsistency between a controlled variable and a state of the control target 500 indicated by sensor data.

The other method detects an abnormal context state as an undefined abnormal state transition when there is a state transition.

A method for determining a context by the context determination unit 130 will now be described. A context is determined by the context determination unit 130 based on a controlled variable and a change over time in sensor data. In the following, a description will be provided using a mobile robot as an example. It is assumed that the movement of the mobile robot is controlled by a motor controlled with pulse width modulation (PWM) and the mobile robot is equipped with an acceleration sensor. The controlled variable can be known from a control signal 301 output from the controller 300. The control signal 301 is a signal for controlling the actuator 400.

As illustrated in Fig. 8, the control signal 301 and the sensor data 201 are input to the context determination unit 130. In this case, the control signal 301 is a PWM value and the sensor data 201 is an acceleration rate.

Fig. 11 is context determination information 132 that indicates criteria for determining a context by the context determination unit 130. By observing a change over time in the PWM value, which is the controlled variable, and a change over time in the acceleration rate, which is sensor data, states such as stationary, acceleration, deceleration, and constant velocity indicated in Fig. 10 can be determined as indicated in the context determination information 132 in Fig. 11. For example, when the controlled variable decreases, deceleration can be determined, and when the controlled variable increases, acceleration can be determined. When the acceleration rate decreases, deceleration can be determined, and when the acceleration rate increases, acceleration can be determined. However, when there is no change in the controlled variable, it is not possible to determine which context is appropriate. When the controlled variable remains constant at 0, it is possible to determine that the context is deceleration or stationary, but it is not possible to decide on one of them. In that case, a determination is made by comparing with the context determined based on the sensor data.

Fig. 12 is a sequence diagram illustrating operation of the attack detection device 100. Referring to Fig. 12, the operation of the attack detection device 100 will be described.

In step S21, the MEMS sensor 200 transmits the sensor data 201 to the controller 300. The controller 300 decides how much to operate the actuator 400 based on the sensor data 201, and transmits the control signal 301 for controlling the actuator 400 to the actuator 400. The actuator 400 acts on the control target 500, and the state of the control target 500 changes. This is control of the control target 500 by feedback control.

In step S22, the MEMS sensor 200 transmits the sensor data 201 to the characteristic detection unit 110. The characteristic detection unit 110 detects whether an attack characteristic is included in the sensor data 201, and transmits a detection result 110a to the attack determination unit 120.

In step S23, the MEMS sensor 200 transmits the sensor data 201 to the context determination unit 130.

In step S24, the controller 300 transmits the control signal 301 to the context determination unit 130. The context determination unit 130 determines a context based on two pieces of information of the sensor data 201 and the control signal 301. The context determination unit 130 transmits a determined current context 131 to the characteristic detection unit 110, the attack determination unit 120, and the state transition detection unit 140.

In step S25, the state transition detection unit 140 detects an abnormal state transition based on the context 131, and transmits a detection result 141 to the attack determination unit 120.

The attack determination unit 120 determines the presence or absence of an attack based on the detection result 110a by the characteristic detection unit 110, the context 131 by the context determination unit 130, and the detection result 141 by the state transition detection unit 140.

In step S26, the attack determination unit 120 transmits the determination result 121 to the controller 300. The controller 300 performs processing based on the determination result 121.

Fig. 13 is a flowchart illustrating operation of the context determination unit 130. Referring to Fig. 13, the operation of the context determination unit 130 will be described. The context determination unit 130 determines a context, which indicates a state of the control target, based on sensor data and a control signal for controlling the control target.

First, in step S101, the context determination unit 130 determines a context based on the controlled variable indicated by the control signal 301 and determines a context based on the sensor data 201, from among the contexts illustrated in Fig. 10. As described above, a context may not be decided by determination based on the controlled variable.

In step S102, the context determination unit 130 checks whether the two contexts match. If the two contexts match, the context determination unit 130 decides on the matching context (step S103). If the two contexts do not match, the context determination unit 130 decides that the context is indefinite.

However, if the context determined based on the controlled variable is A or B and the context determined based on the sensor data 201 is A, the context is decided as A.

Step S104 indicates this decision.

Operation of the state transition detection unit 140 will be described using a flowchart illustrated in Fig. 14. Referring to Fig. 14, the operation of the state transition detection unit 140 will be described.

In step S201, the state transition detection unit 140 receives the context 131 from the context determination unit 130.

In step S202, the state transition detection unit 140 compares the received context 131 with an immediately preceding context received on the previous occasion, and determines a state transition.

In step S203, the state transition detection unit 140 checks whether the state transition from the immediately preceding context to the context 131 is a state transition that is not defined, on the basis of the state transition diagram illustrated in Fig. 10. If the state transition is a normal state transition, the state transition detection unit 140 transmits a detection result indicating "normal" to the attack determination unit 120. If the state transition is abnormal, the state transition detection unit 140 transmits a detection result indicating "abnormal" to the attack determination unit 120.

For example, in the state transition diagram illustrated in Fig. 10, when a transition from stationary to constant is made, the state transition detection unit 140 can determine that it is as an abnormal state transition. This is equivalent to a case in which the acceleration sensor in a stationary state is made to output sensor data in a biased pattern in Fig. 3. However, the state transition detection unit 140 determines that a transition from a certain context to an indeterminate state is abnormal, and a transition from an indeterminate state to any of the other contexts is normal.

Fig. 15 is a flowchart illustrating operation of the attack determination unit 120. Referring to Fig. 15, the operation of the attack determination unit 120 will be described. The basic flow is substantially the same as that in the first embodiment.

Fig. 15 is a flowchart of a case in which an abnormal state transition is not detected by the state transition detection unit 140. The difference from Fig. 6 of the first embodiment is that the attack determination unit 120 changes the threshold value, depending on the context 131. The threshold value that is changed is the threshold value to be compared with a detection result of the detection unit. In Fig. 15, steps S302 and S303 are added in comparison with Fig. 6. Therefore, steps S302 and S303 will be described.

After resetting the threshold value counter 122, the attack determination unit 120 receives the context 131 in step S302.

Fig. 16 is correspondence information 123 that indicates the correspondence between contexts and changes in the threshold values. Once the context is decided, the attack determination unit 120 will know how to change one or more threshold values based on the correspondence information 123. The correspondence information 123 in Fig. 16 indicates the correspondence between the contexts in Fig. 10 and changes in the threshold values.

The attack determination unit 120 weights a score that indicates a corresponding characteristic, depending on the determination result of the context determination unit 130, and determines the presence or absence of an attack on the sensor based on the weighted score. Specifically, in step S303, the attack determination unit 120 refers to the correspondence information 123 and changes one or more threshold values, depending on the context 131.

The correspondence information 123 indicates ways of changing the threshold values corresponding to five contexts: acceleration, deceleration, constant velocity, stationary, and indefinite. For example, in a stationary state, it can be anticipated that sensor data will fluctuate greatly at the next movement, so that the threshold value for detecting an abrupt change should be increased. The correspondence information 123 is created based on such an idea.

In this way, the attack determination unit 120 changes the threshold value, depending on the received context 131.

The state transition detection unit 140 uses the context 131 determined by the context determination unit 130 and a context immediately preceding the context 131 to detect an abnormal state transition from the immediately preceding context to the context 131.

If an abnormal state transition is detected by the state transition detection unit 140, the attack determination unit 120 determines that there is an attack on the sensor and notifies the controller 300 of an anomaly as the determination result 121. Alternatively, if an abnormal state transition is detected by the state transition detection unit 140, the attack determination unit 120 may change all or some of the threshold values 1 to 6 without determining the presence of an attack.

*** Description of Effects of Second Embodiment ***

In the second embodiment, when there is an attack on the MEMS sensor 200, the attack can be detected based on attack characteristics as in the first embodiment.

In addition to the effects of the first embodiment which are that no modification to the sensor is required and it can be used for many types of sensors, the attack detection device 100 has effects of allowing detection of a wider variety of attacks and allowing false detections to be reduced.

In addition, the attack detection device 100 changes one or more threshold values, depending on the context 131, so that false attack detections can be reduced.

In addition, the attack detection device 100 can detect an attack by observing an abnormal state transition due to the attack.

## Reference Signs List

1, 2, 3, 4, 5, 6: threshold value; 10: attack detection system; 11, 12, 13, 14, 15, 16: detection result; 100: attack detection device; 110: characteristic detection unit; 110a: detection result; 111: high frequency detection unit; 112: amplitude change detection unit; 113: periodic change detection unit; 114: abrupt change detection unit; 115: bias detection unit; 116: single sine wave detection unit; 120: attack determination unit; 121: determination result; 122: threshold value counter; 123: correspondence information; 130: context determination unit; 131: context; 132: context determination information; 140: state transition detection unit; 141: detection result; 200: MEMS sensor; 201: sensor data; 300: controller; 301: control signal; 400: actuator; 500: control target; 600: control system; 700: attack detection system; 910: processor; 920: memory; 930: sensor data input interface; 940: attack determination result output interface; 950: control signal input interface; 960: low-pass filter

## Claims

1. An attack detection device (100) comprising:

   a characteristic detection unit (110) configured to treat sensor data detected by a sensor as a waveform of time-series data, and detect in the waveform of the sensor data a corresponding characteristic corresponding to a reference characteristic, the characteristic detection unit (110) detecting the corresponding characteristic for each of a plurality of reference characteristics of respectively different types;
   wherein the reference characteristic is a characteristic to be detected in the waveform of the sensor data, and the corresponding characteristic is a characteristic corresponding to one reference characteristic of the plurality of different reference characteristics;
   wherein the characteristic detection unit (110) is further configured to detect, as the corresponding characteristic, a frequency characteristic, an amplitude change characteristic, a periodic change, an abrupt change, bias, and continued superposition of a sine wave, in the waveform indicated by the sensor data; and
   an attack determination unit (120) configured to determine presence or absence of an attack on the sensor, based on a plurality of said corresponding characteristics, each detected for a corresponding one of the plurality of reference characteristics;
   wherein the characteristic detection unit (110) generates each of the corresponding characteristics as a score indicating a degree of matching with the reference characteristic corresponding to the corresponding characteristic, and
   wherein the attack determination unit (120) determines the presence or absence of an attack on the sensor, using the score indicating each of the corresponding characteristics.

2. The attack detection device (100) according to claim 1,
   wherein the attack determination unit (120) weights the score indicating the corresponding characteristic, depending on the type of the reference characteristic corresponding to the corresponding characteristic, and determines the presence or absence of an attack on the sensor based on the weighted score.

3. The attack detection device (100) according to claim 1, further comprising

   a context determination unit (130) configured to determine a context indicating a state of a control target, based on the sensor data and a control signal for controlling the control target,
   wherein the attack determination unit (120) weights the score indicating the corresponding characteristic, depending on a determination result of the context determination unit (130), and determines the presence or absence of an attack on the sensor based on the weighted score.

4. The attack detection device (100) according to claim 3, further comprising

   a state transition detection unit (140) configured to detect an abnormal state transition from an immediately preceding context to the determined context, using the determined context and the immediately preceding context of the determined context,
   wherein when the abnormal state transition is detected by the state transition detection unit (140), the attack determination unit (120) determines the presence of an attack on the sensor.

5. An attack detection method comprising:

treating sensor data detected by a sensor as a waveform of time-series data, and detecting in the waveform of the sensor data a corresponding characteristic corresponding to a reference characteristic, the corresponding characteristic being detected for each of a plurality of reference characteristics of respectively different types;
wherein the reference characteristic is a characteristic to be detected in the waveform of the sensor data, and the corresponding characteristic is a characteristic corresponding to one reference characteristic of the plurality of different reference characteristics;
wherein, as the corresponding characteristic, a frequency characteristic, an amplitude change characteristic, a periodic change, an abrupt change, bias, and continued superposition of a sine wave, in the waveform indicated by the sensor data, is detected; and
determining presence or absence of an attack on the sensor, based on a plurality of said corresponding characteristics, each detected for a corresponding one of the plurality of reference characteristics,
by a computer;
wherein each of the corresponding characteristics is generated as a score indicating a degree of matching with the reference characteristic corresponding to the corresponding characteristic, and
wherein the presence or absence of an attack on the sensor is determined, using the score indicating each of the corresponding characteristics.

**6.** An attack detection program for causing a computer to execute the steps of the method as defined in claim 5.

**Patentansprüche**

**1.** Angriffserfassungseinrichtung (100), umfassend:
eine Charakteristik-Erfassungseinheit (110), die eingerichtet ist, Sensordaten zu verarbeiten, die erfasst wurden durch:

einen Sensor als eine Wellenform von Zeitreihendaten, und in der Wellenform der Sensordaten eine entsprechende Charakteristik zu erfassen, die einer Referenz-Charakteristik entspricht, wobei die Charakteristik-Erfassungseinheit (110) die entsprechende Charakteristik für jede einer Vielzahl von Referenz-Charakteristiken von jeweils unterschiedlichen Typen erfasst;
wobei die Referenz-Charakteristik eine Charakteristik ist, die in der Wellenform der Sensordaten zu erfassen ist, und die entsprechende Charakteristik eine Charakteristik ist, die einer Referenz-Charakteristik aus der Vielzahl der verschiedenen Referenz-Charakteristiken entspricht;
wobei die Charakteristik-Erfassungseinheit (110) ferner eingerichtet ist, als die entsprechende Charakteristik eine Frequenz-Charakteristik, eine Amplitudenänderungscharakteristik, eine periodische Änderung, eine abrupte Änderung, ein Bias und eine fortgesetzte Überlagerung einer Sinuswelle in der durch die Sensordaten angezeigten Wellenform zu erfassen; und
eine Angriffsbestimmungseinheit (120), die eingerichtet ist, Vorhandensein oder Nichtvorhandensein eines Angriffs auf den Sensor zu bestimmen auf Grundlage einer Vielzahl der entsprechenden Charakteristiken, die jeweils für eine Entsprechende aus der Vielzahl der Referenz-Charakteristiken erfasst wurden;
wobei die Charakteristik-Erfassungseinheit (110) jede der entsprechenden Charakteristiken als eine Bewertung generiert, die einen Grad der Übereinstimmung mit der Referenzcharakteristik angibt, die der entsprechenden Charakteristik entspricht, und
wobei die Angriffsbestimmungseinheit (120) das Vorhandensein oder Nichtvorhandensein eines Angriffs auf den Sensor bestimmt, indem die Bewertung genutzt wird, die jede der entsprechenden Charakteristiken angibt.

**2.** Angriffserfassungseinrichtung (100) nach Anspruch 1,
wobei die Angriffsbestimmungseinheit (120) die Bewertung, die die entsprechende Charakteristik angibt, in Abhängigkeit von dem Typ der der entsprechenden Charakteristik entsprechenden Referenz-Charakteristik gewichtet, und das Vorhandensein oder Nichtvorhandensein eines Angriffs auf den Sensor auf Grundlage der gewichteten Bewertung bestimmt.

**3.** Angriffserfassungseinrichtung (100) nach Anspruch 1, ferner umfassend:

eine Kontext-Bestimmungseinheit (130), die eingerichtet ist, einen Kontext zu bestimmen, der einen Zustand eines Steuerziels angibt, auf Grundlage der Sensordaten und eines Steuersignals zum Steuern des Steuerziels,
wobei die Angriffsbestimmungseinheit (120) die die entsprechende Charakteristik angebende Bewertung in Abhängigkeit von einem Bestimmungsergebnis der Kontext-Bestimmungseinheit (130) gewichtet und das Vorhandensein oder Nichtvorhandensein eines Angriffs auf den Sensor auf Grundlage der gewichteten Bewertung bestimmt.

**4.** Angriffserfassungseinrichtung (100) nach Anspruch 3, ferner umfassend:

eine Zustandsübergang-Erfassungseinheit (140), die eingerichtet ist, einen anormalen Zustandsübergang von einem unmittelbar vorhergehenden Kontext zu dem bestimmten Kontext zu erfassen, unter Verwendung des bestimmten Kontexts und des unmittelbar vorhergehenden Kontexts des bestimmten Kontexts,
wobei, wenn der anormale Zustandsübergang von der Zustandsübergang-Erfassungseinheit (140) erfasst wird, die Angriffsbestimmungseinheit (120) das Vorhandensein eines Angriffs auf den Sensor bestimmt.

**5.** Angriffsdetektionsverfahren, umfassend:

Verarbeiten von Sensordaten, die von einem Sensor erfasst werden, als eine Wellenform von Zeitreihendaten, und Erfassen in der Wellenform der Sensordaten einer entsprechenden Charakteristik, die einer Referenz-Charakteristik entspricht, wobei die entsprechende Charakteristik für jede einer Vielzahl von Referenz-Charakteristiken von jeweils verschiedenen Typen erfasst wird;
wobei die Referenz-Charakteristik eine Charakteristik ist, die in der Wellenform der Sensordaten zu erfassen ist, und die entsprechende Charakteristik eine Charakteristik ist, die einer Referenz-Charakteristik aus der Vielzahl der verschiedenen Referenz-Charakteristiken entspricht;
wobei als die entsprechende Charakteristik eine Frequenz-Charakteristik, eine Amplitudenänderungscharakteristik, eine periodische Änderung, eine abrupte Änderung, ein Bias und eine fortgesetzte Überlagerung einer Sinuswelle in der durch die Sensordaten angegebenen Wellenform erfasst wird; und
Bestimmen von Vorhandensein oder Nichtvorhandensein eines Angriffs auf den Sensor auf Grundlage einer Vielzahl der entsprechenden Charakteristiken, die jeweils für eine Entsprechende aus der Vielzahl von Referenz-Charakteristiken erfasst wurden,
durch einen Computer;
wobei jede der entsprechenden Charakteristiken als eine Bewertung generiert wird, die einen Grad von Übereinstimmung mit der Referenz-Charakteristik angibt, die der entsprechenden Charakteristik entspricht, und
wobei das Vorhandensein oder Nichtvorhandensein eines Angriffs auf den Sensor bestimmt wird unter Verwendung der Bewertung, die jede der entsprechenden Charakteristiken angibt.

**6.** Angriffsdetektionsprogramm, um einen Computer zu veranlassen, die Schritte des Verfahrens nach Anspruch 5 auszuführen.

## Revendications

**1.** Dispositif de détection d’attaque (100) comprenant :

une unité de détection de caractéristique (110) configurée pour traiter des données de capteur détectées par un capteur en tant que forme d’onde de données de séries chronologiques, et pour détecter, dans la forme d’onde de données de capteur, une caractéristique correspondante qui correspond à une caractéristique de référence, l’unité de détection de caractéristique (110) détectant la caractéristique correspondante pour chacune d’une pluralité de caractéristiques de référence de différents types respectivement ;
dans lequel la caractéristique de référence est une caractéristique à détecter dans la forme d’onde de données de capteur, et la caractéristique correspondante est une caractéristique qui correspond à une caractéristique de référence de la pluralité de différentes caractéristiques de référence ;
dans lequel l’unité de détection de caractéristique (110) est configurée en outre pour détecter, en tant que caractéristique correspondante, une caractéristique de fréquence, une caractéristique de modification d’amplitude, une modification périodique, une modification brusque, une polarisation, et une superposition continue d’une onde sinusoïdale, dans la forme d’onde indiquée par les données de capteur ; et
une unité de détermination d’attaque (120) configurée pour déterminer la présence ou l’absence d’une attaque sur le capteur, sur la base d’une pluralité desdites caractéristiques correspondantes, chacune d’elles étant détectée pour l’une correspondante de la pluralité de caractéristiques de référence ;
dans lequel l’unité de détection de caractéristique (110) génère chacune des caractéristiques correspondantes en tant que résultats qui indiquent un degré de correspondance avec la caractéristique de référence qui correspond à la caractéristique correspondante, et

dans lequel l'unité de détermination d'attaque (120) détermine la présence ou l'absence d'une attaque sur le capteur, en utilisant le résultat qui indique chacune des caractéristiques correspondantes.

**2.** Dispositif de détection d'attaque (100) selon la revendication 1,
dans lequel l'unité de détermination d'attaque (120) pondère le résultat qui indique la caractéristique correspondante, selon le type de la caractéristique de référence qui correspond à la caractéristique correspondante, et détermine la présence ou l'absence d'une attaque sur le capteur sur la base du résultat pondéré.

**3.** Dispositif de détection d'attaque (100) selon la revendication 1, comprenant en outre :

une unité de détermination de contexte (130) configurée pour déterminer un contexte qui indique un état d'une cible de commande, sur la base des données de détecteur, et d'un signal de commande destiné à commander la cible de commande,
dans lequel l'unité de détermination d'attaque (120) pondère le résultat qui indique la caractéristique correspondante, selon un résultat de détermination de l'unité de détermination de contexte (130), et détermine la présence ou l'absence d'une attaque sur le capteur sur la base du résultat pondéré.

**4.** Dispositif de détection d'attaque (100) selon la revendication 3, comprenant en outre :

une unité de détection de transition d'état (140) configurée pour détecter une transition d'état anormale à partir d'un contexte qui précède immédiatement le contexte déterminé, en utilisant le contexte déterminé et le contexte qui précède immédiatement le contexte déterminé,
dans lequel, quand une transition d'état anormale est détectée par l'unité de détection de transition d'état (140), l'unité de détermination d'attaque (120) détermine la présence d'une attaque sur le capteur.

**5.** Procédé de détection d'attaque comprenant les étapes suivantes :

traiter des données de capteur détectées par un capteur en tant que forme d'onde de données de séries chronologiques, et détecter, dans la forme d'onde de données de détecteur, une caractéristique correspondante qui correspond à une caractéristique de référence, le caractéristique correspondante étant détectée pour chacune d'une pluralité de caractéristiques de référence de différents types respectivement ;
dans lequel la caractéristique de référence est une caractéristique à détecter dans la forme d'onde de données de capteur, et la caractéristique correspondante est une caractéristique qui correspond à une caractéristique de référence de la pluralité de différentes caractéristiques de référence ;
dans lequel, est détectée, en tant que caractéristique correspondante, une caractéristique de fréquence, une caractéristique de modification d'amplitude, une modification périodique, une modification brusque, une polarisation, et une superposition continue d'une onde sinusoïdale, dans la forme d'onde indiquée par les données de capteur ; et
déterminer la présence ou l'absence d'une attaque sur le capteur, sur la base d'une pluralité desdites caractéristiques correspondantes, chacune d'elles étant détecté pour l'une correspondante de la pluralité de caractéristiques de référence,
par un ordinateur;
dans lequel chacune des caractéristiques correspondantes est générée en tant que résultat qui indique un degré de correspondance avec la caractéristique de référence qui correspond à la caractéristique correspondante, et
dans lequel la présence ou l'absence d'une attaque sur le capteur est déterminée, en utilisant le résultat qui indique chacune des caractéristiques correspondantes.

**6.** Programme de détection d'attaque, destiné à faire exécuter par un ordinateur, les étapes du procédé selon la revendication 5.

Fig. 1

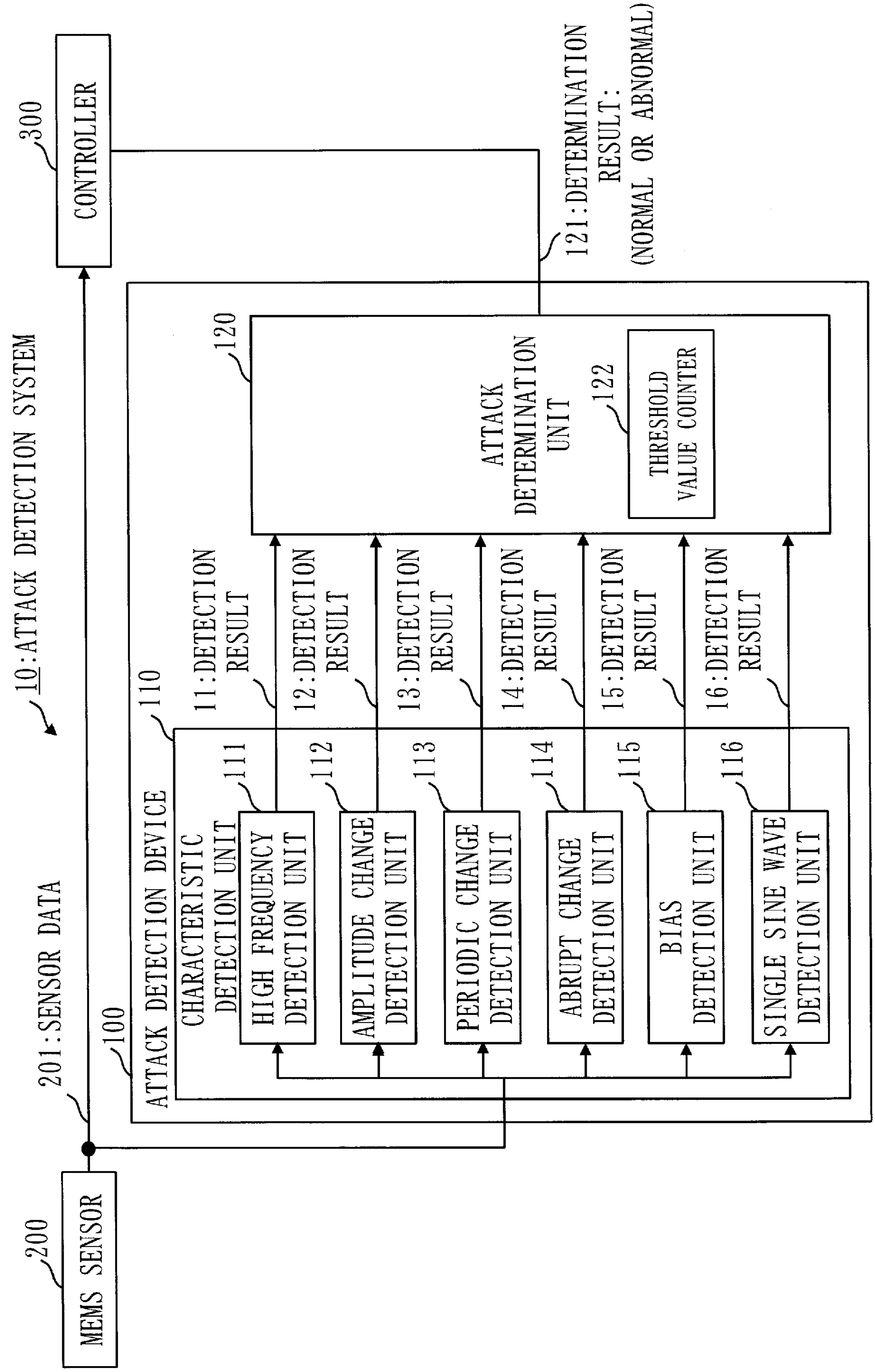
10:ATTACK DETECTION SYSTEM
200
MEMS SENSOR
201:SENSOR DATA
300
CONTROLLER
100
ATTACK DETECTION DEVICE
110
CHARACTERISTIC DETECTION UNIT
111
HIGH FREQUENCY DETECTION UNIT
112
AMPLITUDE CHANGE DETECTION UNIT
113
PERIODIC CHANGE DETECTION UNIT
114
ABRUPT CHANGE DETECTION UNIT
115
BIAS DETECTION UNIT
116
SINGLE SINE WAVE DETECTION UNIT
11:DETECTION RESULT
12:DETECTION RESULT
13:DETECTION RESULT
14:DETECTION RESULT
15:DETECTION RESULT
16:DETECTION RESULT
120
ATTACK DETERMINATION UNIT
122
THRESHOLD VALUE COUNTER
121:DETERMINATION RESULT: (NORMAL OR ABNORMAL)

Fig. 2

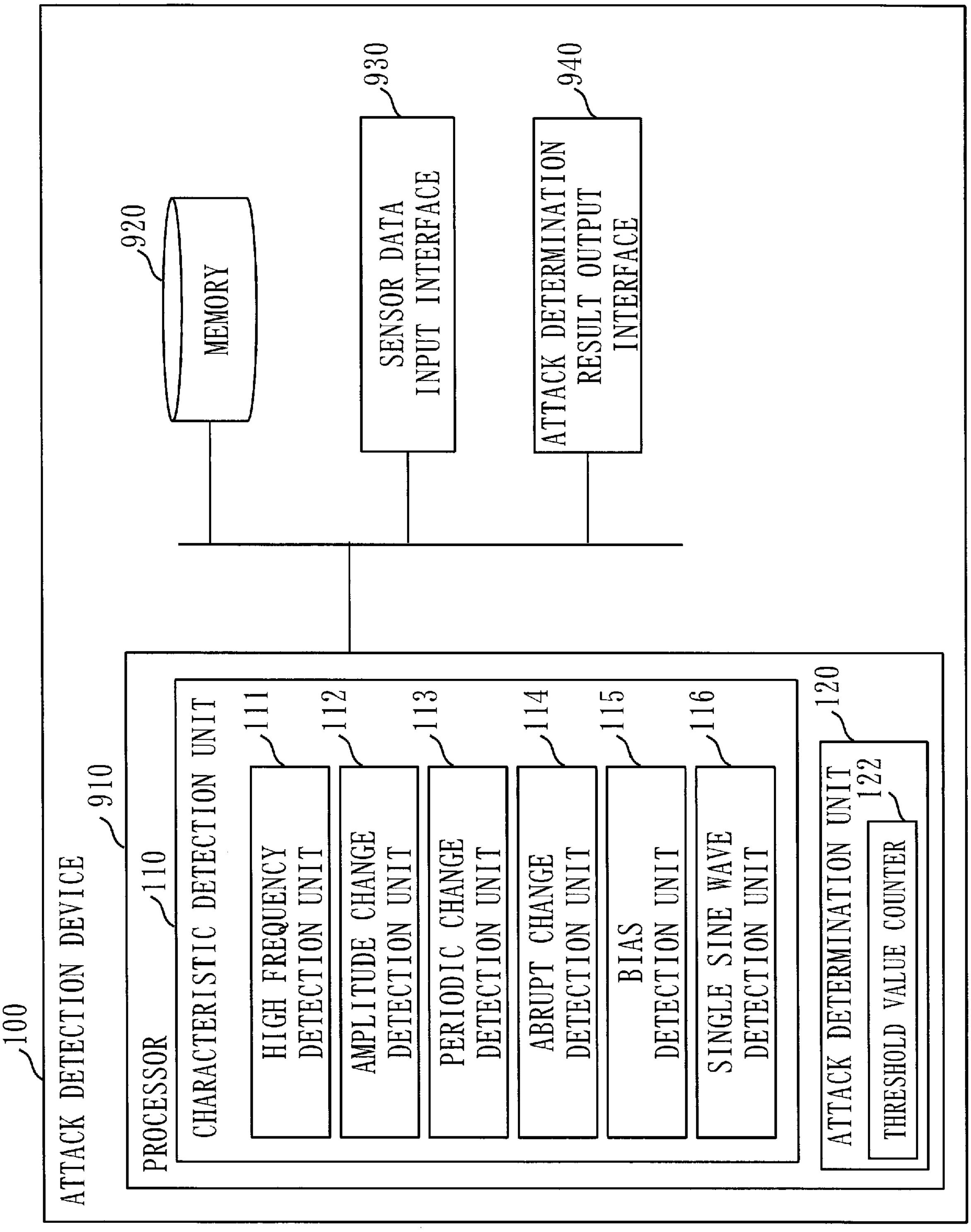
100
ATTACK DETECTION DEVICE
910
PROCESSOR
110
CHARACTERISTIC DETECTION UNIT
111
HIGH FREQUENCY DETECTION UNIT
112
AMPLITUDE CHANGE DETECTION UNIT
113
PERIODIC CHANGE DETECTION UNIT
114
ABRUPT CHANGE DETECTION UNIT
115
BIAS DETECTION UNIT
116
SINGLE SINE WAVE DETECTION UNIT
120
ATTACK DETERMINATION UNIT
122
THRESHOLD VALUE COUNTER
920
MEMORY
930
SENSOR DATA INPUT INTERFACE
940
ATTACK DETERMINATION RESULT OUTPUT INTERFACE

Fig. 3

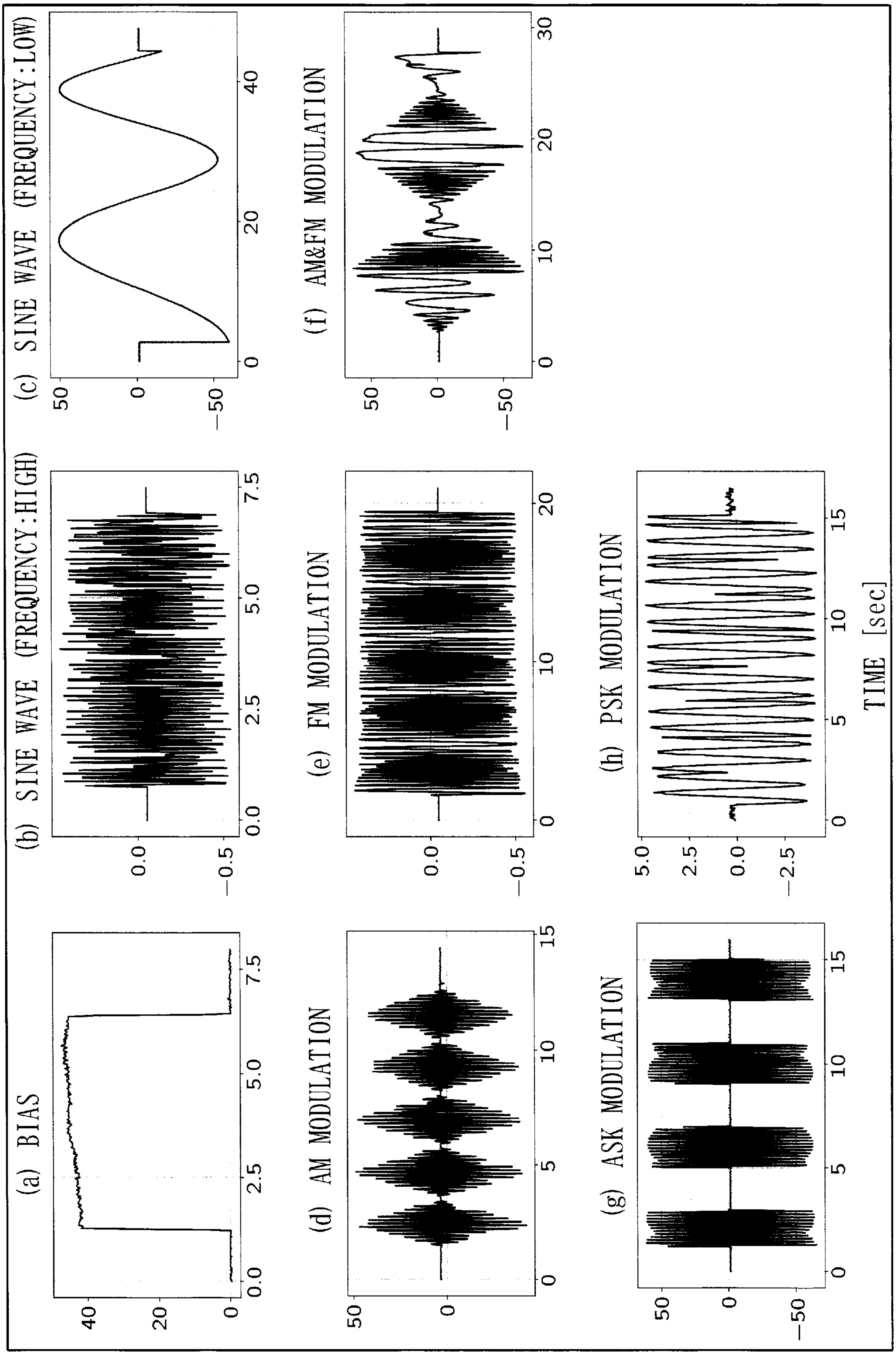
(a) BIAS
(b) SINE WAVE (FREQUENCY:HIGH)
(c) SINE WAVE (FREQUENCY:LOW)
(d) AM MODULATION
(e) FM MODULATION
(f) AM&FM MODULATION
(g) ASK MODULATION
(h) PSK MODULATION
TIME [sec]

Fig. 4

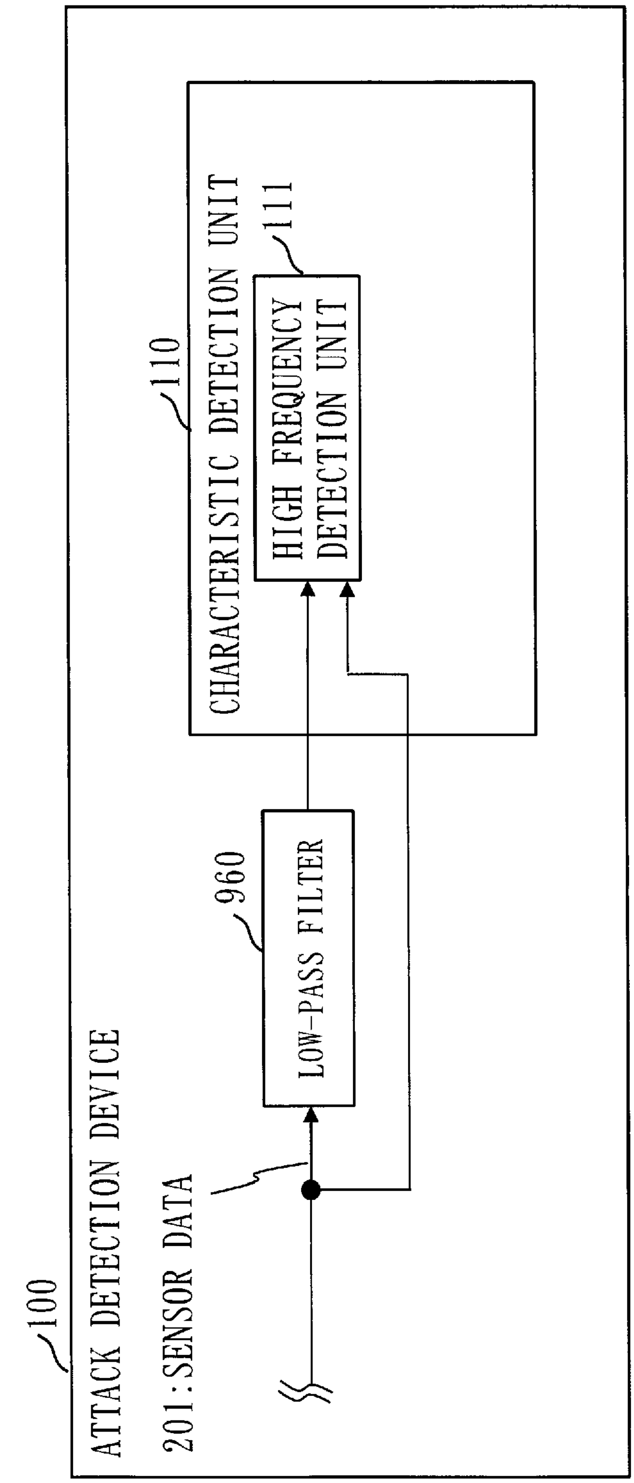
100
ATTACK DETECTION DEVICE
201:SENSOR DATA
960
LOW-PASS FILTER
110
CHARACTERISTIC DETECTION UNIT
111
HIGH FREQUENCY DETECTION UNIT

Fig. 5

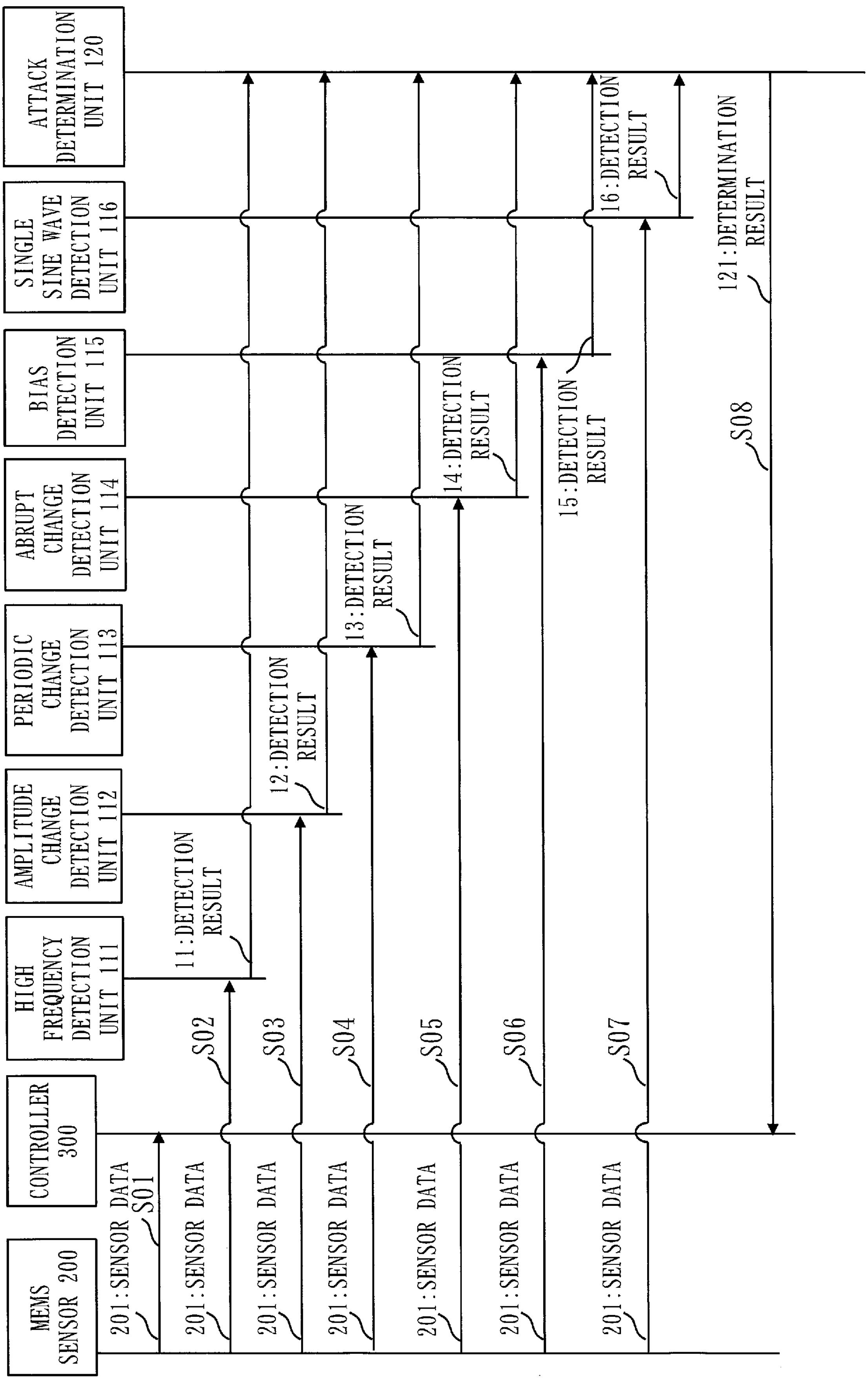
MEMS SENSOR 200
CONTROLLER 300
HIGH FREQUENCY DETECTION UNIT 111
AMPLITUDE CHANGE DETECTION UNIT 112
PERIODIC CHANGE DETECTION UNIT 113
ABRUPT CHANGE DETECTION UNIT 114
BIAS DETECTION UNIT 115
SINGLE SINE WAVE DETECTION UNIT 116
ATTACK DETERMINATION UNIT 120
201:SENSOR DATA
S01
201:SENSOR DATA
S02
11:DETECTION RESULT
201:SENSOR DATA
S03
12:DETECTION RESULT
201:SENSOR DATA
S04
13:DETECTION RESULT
201:SENSOR DATA
S05
14:DETECTION RESULT
201:SENSOR DATA
S06
15:DETECTION RESULT
201:SENSOR DATA
S07
16:DETECTION RESULT
S08
121:DETERMINATION RESULT

Fig. 6

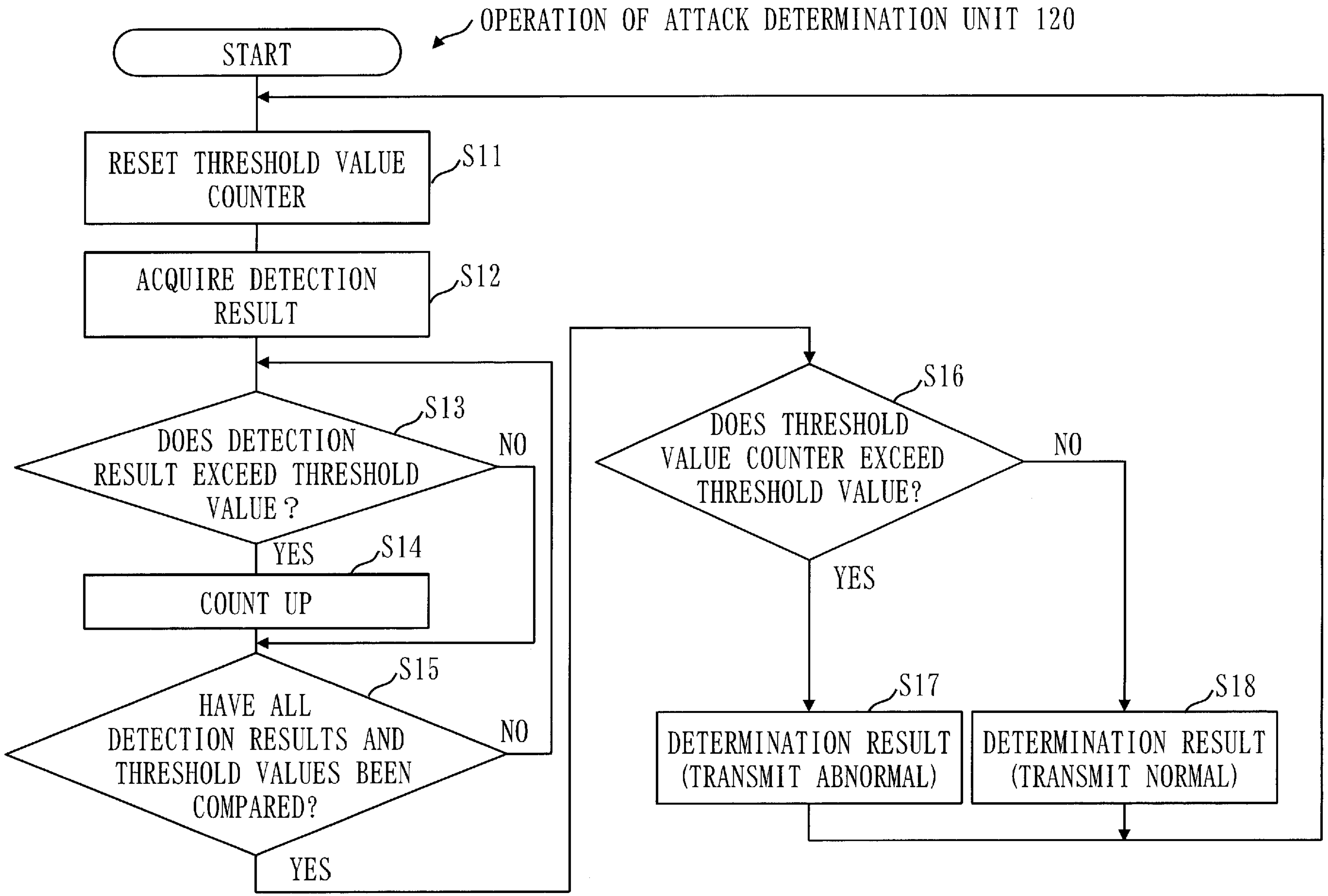
OPERATION OF ATTACK DETERMINATION UNIT 120
START
RESET THRESHOLD VALUE COUNTER
S11
ACQUIRE DETECTION RESULT
S12
DOES DETECTION RESULT EXCEED THRESHOLD VALUE ?
S13
NO
YES
COUNT UP
S14
HAVE ALL DETECTION RESULTS AND THRESHOLD VALUES BEEN COMPARED?
S15
NO
YES
DOES THRESHOLD VALUE COUNTER EXCEED THRESHOLD VALUE?
S16
NO
YES
DETERMINATION RESULT (TRANSMIT ABNORMAL)
S17
DETERMINATION RESULT (TRANSMIT NORMAL)
S18

Fig. 7

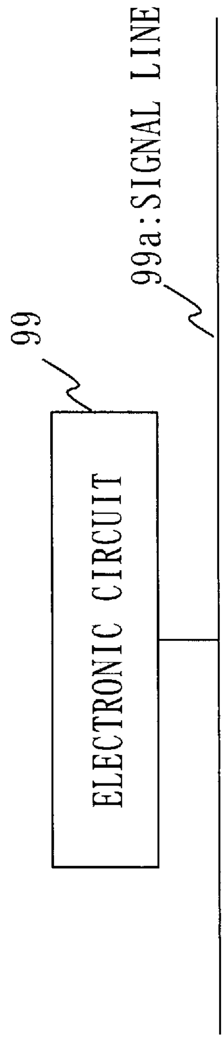

Fig. 8

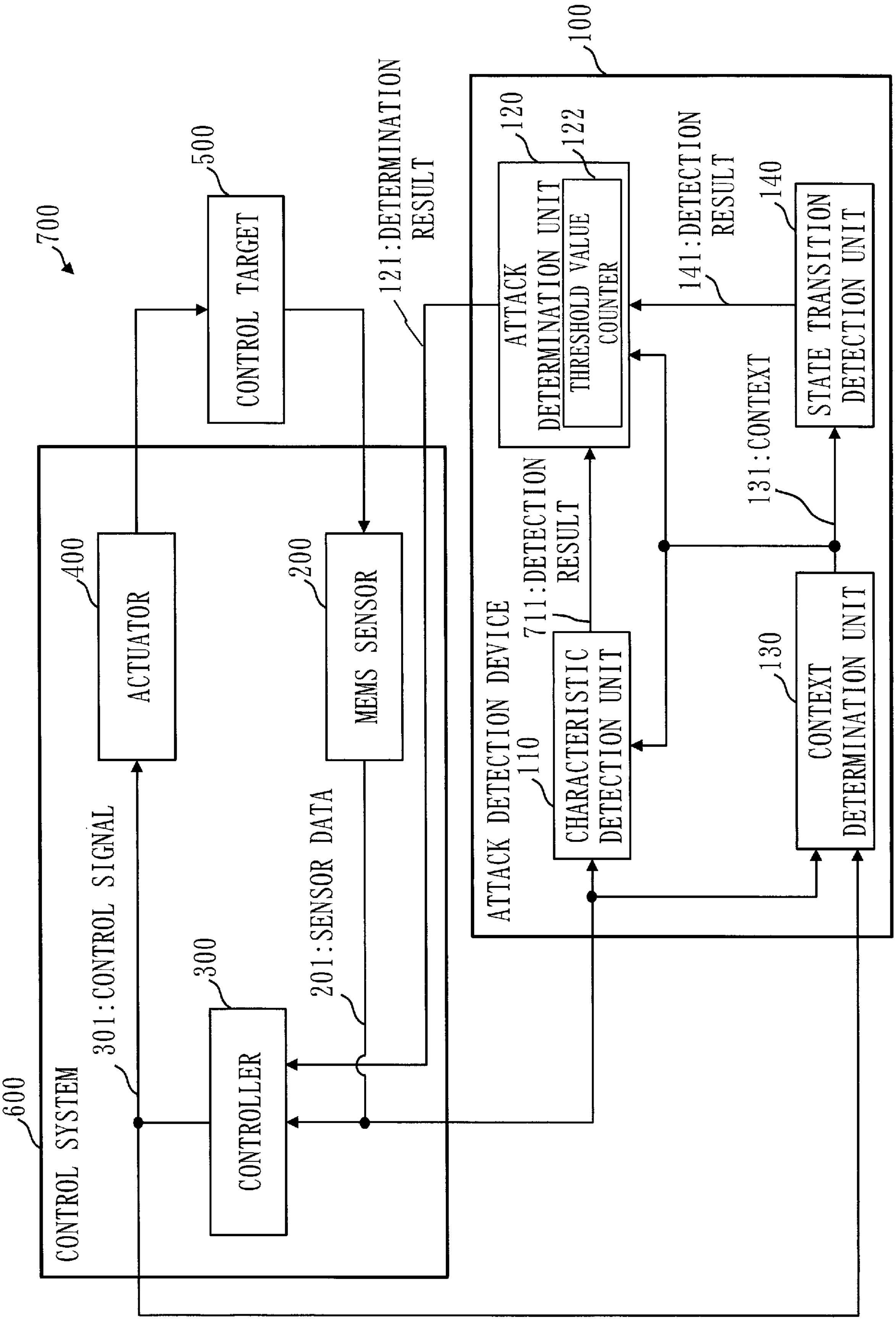
700
CONTROL SYSTEM
600
CONTROLLER
300
ACTUATOR
400
MEMS SENSOR
200
CONTROL TARGET
500
301:CONTROL SIGNAL
201:SENSOR DATA
121:DETERMINATION RESULT
ATTACK DETECTION DEVICE
100
CHARACTERISTIC DETECTION UNIT
110
711:DETECTION RESULT
ATTACK DETERMINATION UNIT
120
THRESHOLD VALUE COUNTER
122
CONTEXT DETERMINATION UNIT
130
131:CONTEXT
STATE TRANSITION DETECTION UNIT
140
141:DETECTION RESULT

Fig. 9

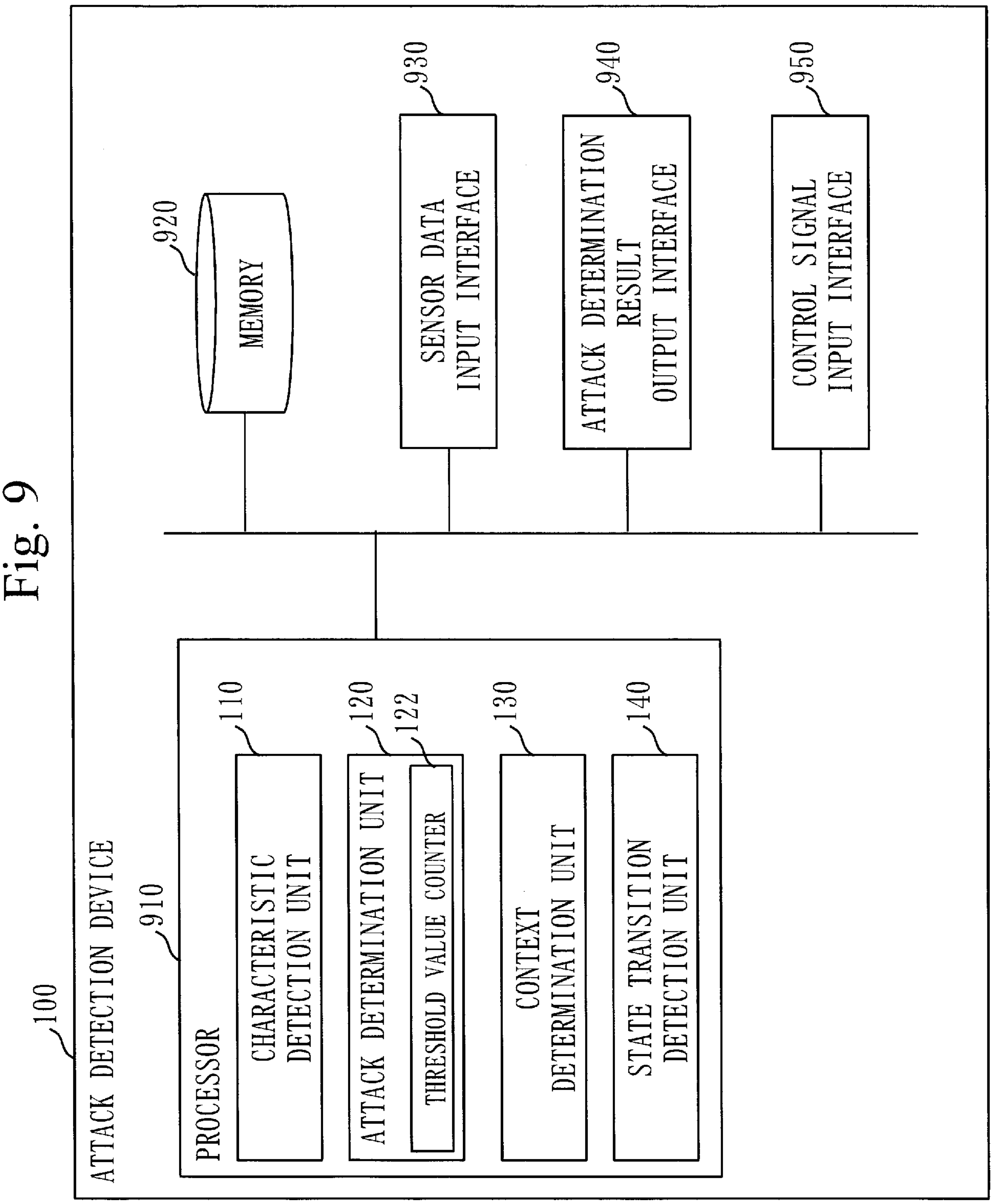
100
ATTACK DETECTION DEVICE
910
PROCESSOR
110
CHARACTERISTIC DETECTION UNIT
120
ATTACK DETERMINATION UNIT
122
THRESHOLD VALUE COUNTER
130
CONTEXT DETERMINATION UNIT
140
STATE TRANSITION DETECTION UNIT
920
MEMORY
930
SENSOR DATA INPUT INTERFACE
940
ATTACK DETERMINATION RESULT OUTPUT INTERFACE
950
CONTROL SIGNAL INPUT INTERFACE

Fig.10

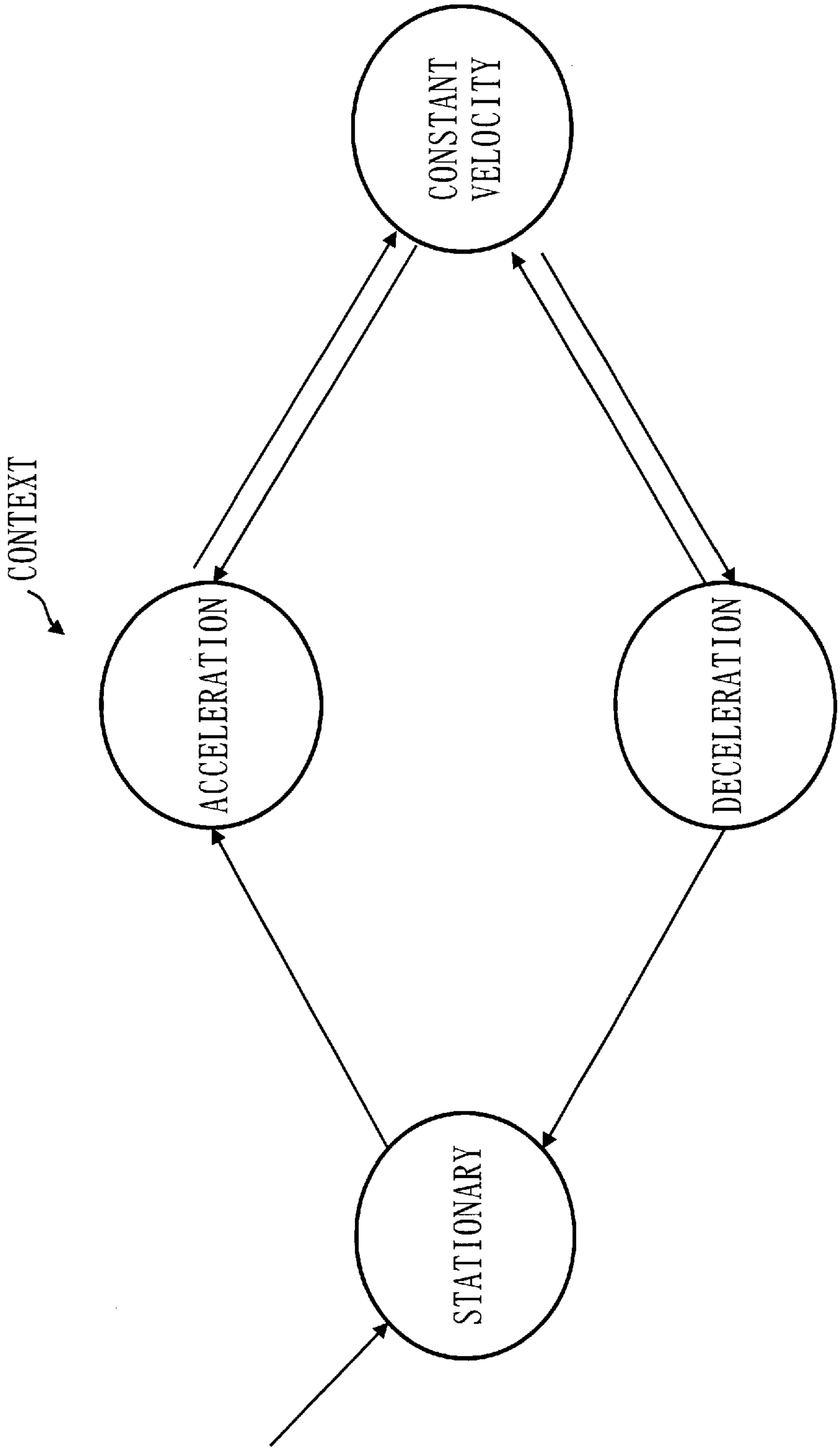
CONTEXT
CONSTANT VELOCITY
ACCELERATION
DECELERATION
STATIONARY

Fig. 11

132:CONTEXT DETERMINATION INFORMATION

| TARGET | CHANGE OVER TIME | CONTEXT |
|---|---|---|
| CONTROLLED VARIABLE (PWM VALUE) | DECREASED | DECELERATION |
| | INCREASED | ACCELERATION |
| | NO CHANGE (CONSTANT) | [INDEFINITE] |
| | CONSTANT AT 0 | DECELERATION or STATIONARY |
| SENSOR DATA (ACCELERATION RATE) | DECREASED | DECELERATION |
| | INCREASED | ACCELERATION |
| | NO CHANGE (CONSTANT) | CONSTANT VELOCITY |
| | CONSTANT AT 0 | STATIONARY |

Fig. 12

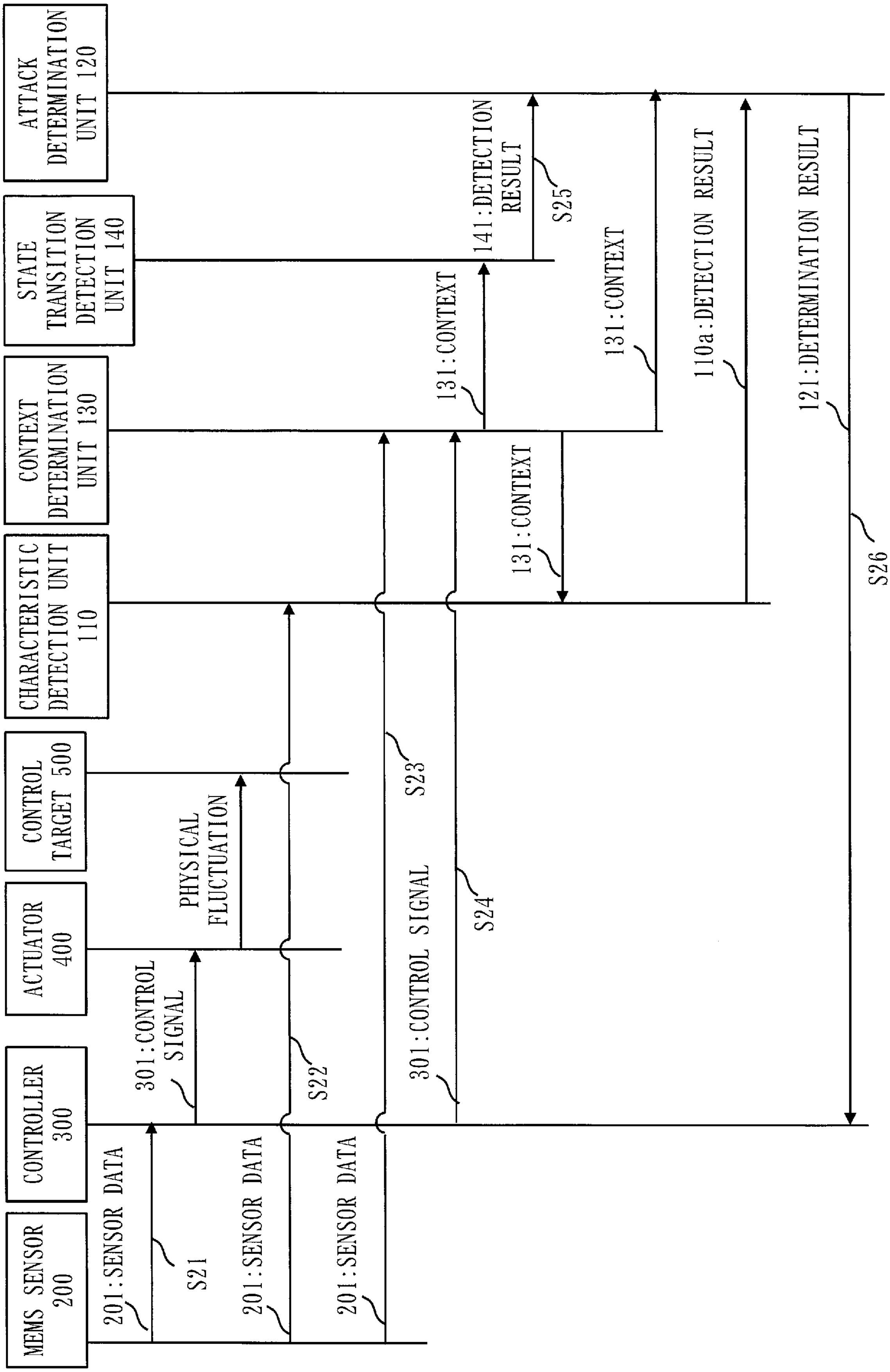
MEMS SENSOR 200
CONTROLLER 300
ACTUATOR 400
CONTROL TARGET 500
CHARACTERISTIC DETECTION UNIT 110
CONTEXT DETERMINATION UNIT 130
STATE TRANSITION DETECTION UNIT 140
ATTACK DETERMINATION UNIT 120
201:SENSOR DATA
S21
301:CONTROL SIGNAL
PHYSICAL FLUCTUATION
201:SENSOR DATA
S22
201:SENSOR DATA
301:CONTROL SIGNAL
S23
S24
131:CONTEXT
131:CONTEXT
141:DETECTION RESULT
S25
131:CONTEXT
110a:DETECTION RESULT
121:DETERMINATION RESULT
S26

Fig. 13

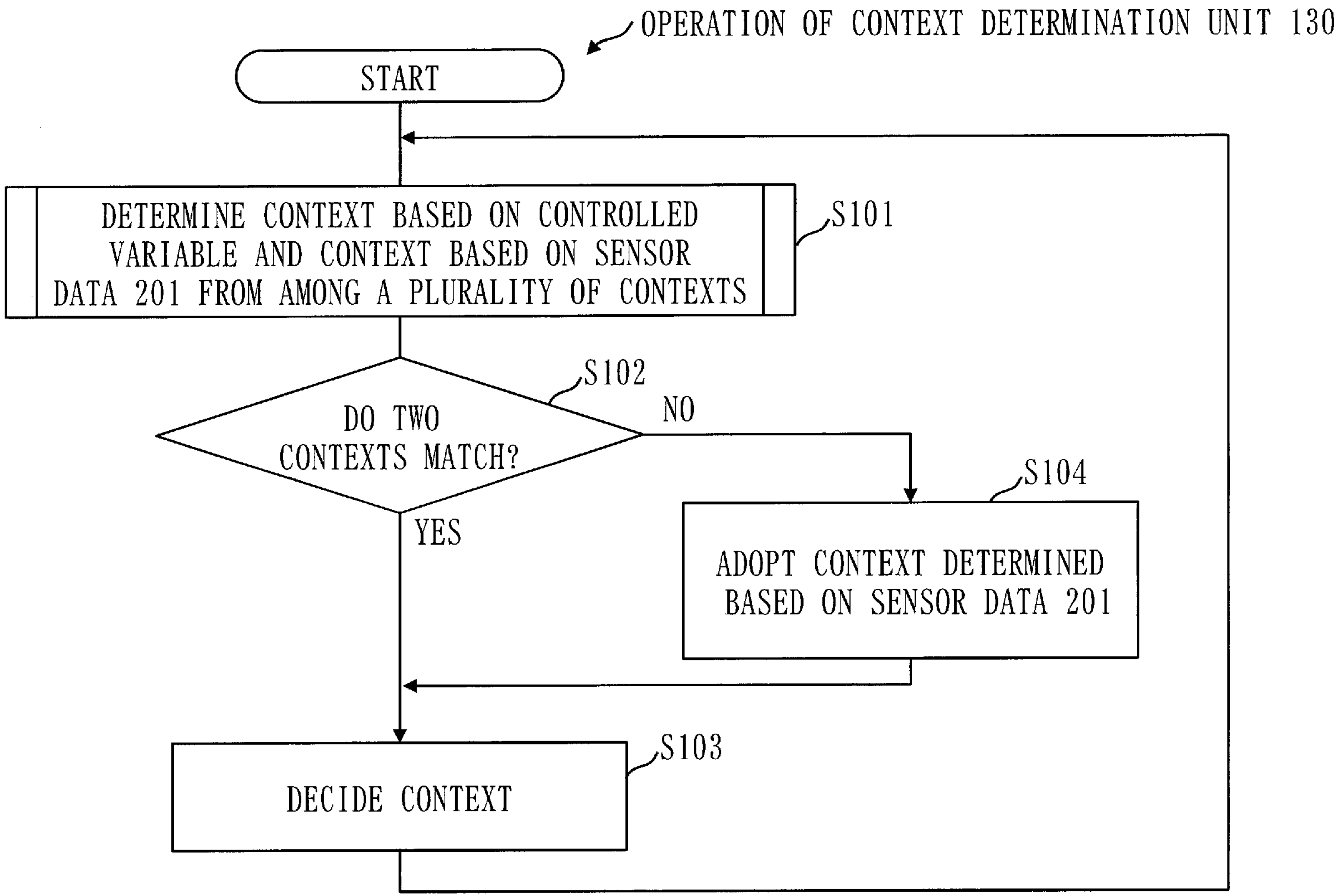
OPERATION OF CONTEXT DETERMINATION UNIT 130
START
DETERMINE CONTEXT BASED ON CONTROLLED VARIABLE AND CONTEXT BASED ON SENSOR DATA 201 FROM AMONG A PLURALITY OF CONTEXTS
S101
DO TWO CONTEXTS MATCH?
S102
NO
YES
ADOPT CONTEXT DETERMINED BASED ON SENSOR DATA 201
S104
DECIDE CONTEXT
S103

Fig. 14

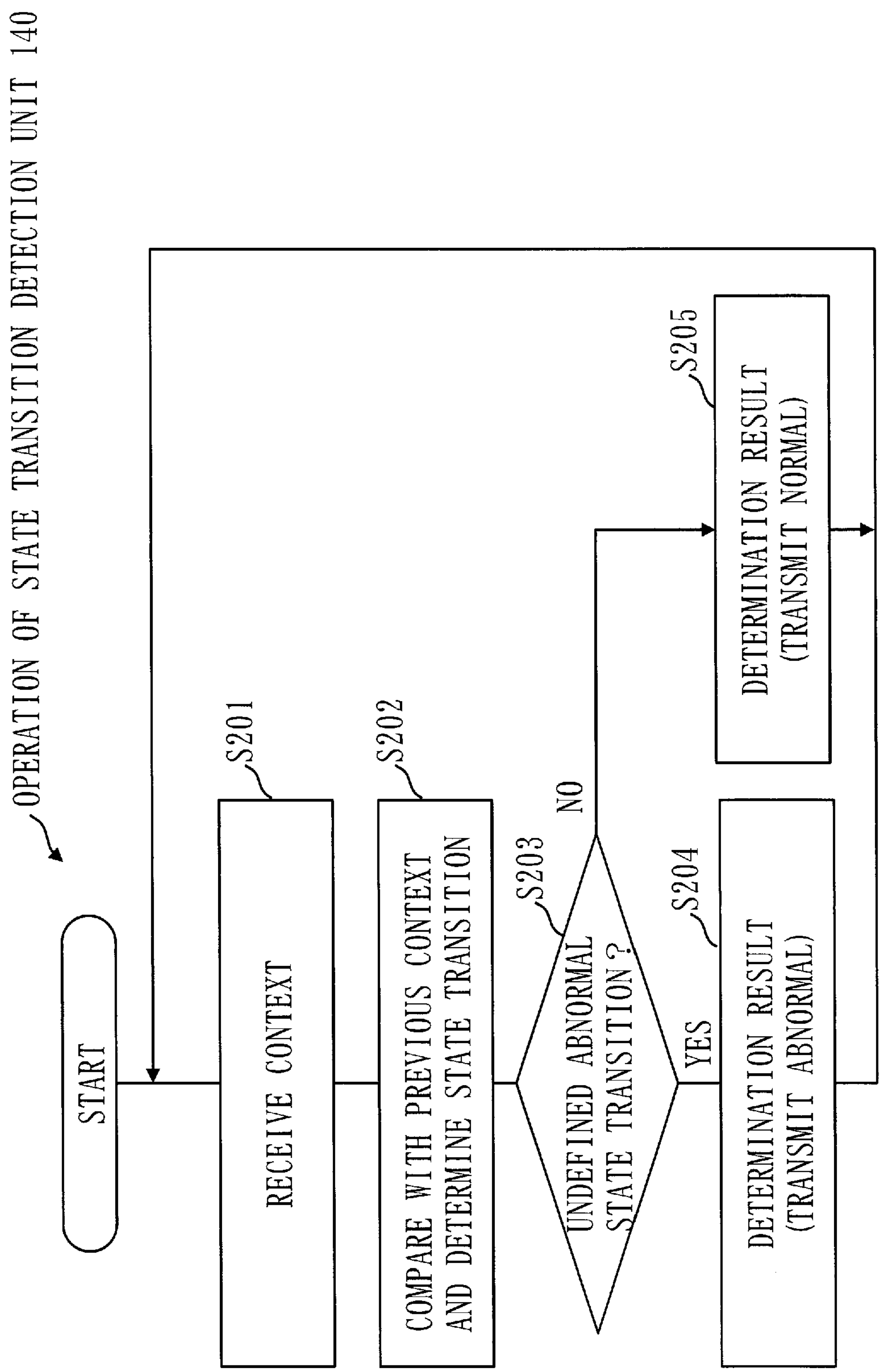
OPERATION OF STATE TRANSITION DETECTION UNIT 140
START
S201
RECEIVE CONTEXT
S202
COMPARE WITH PREVIOUS CONTEXT AND DETERMINE STATE TRANSITION
S203
UNDEFINED ABNORMAL STATE TRANSITION ?
YES
NO
S204
DETERMINATION RESULT (TRANSMIT ABNORMAL)
S205
DETERMINATION RESULT (TRANSMIT NORMAL)

Fig. 15

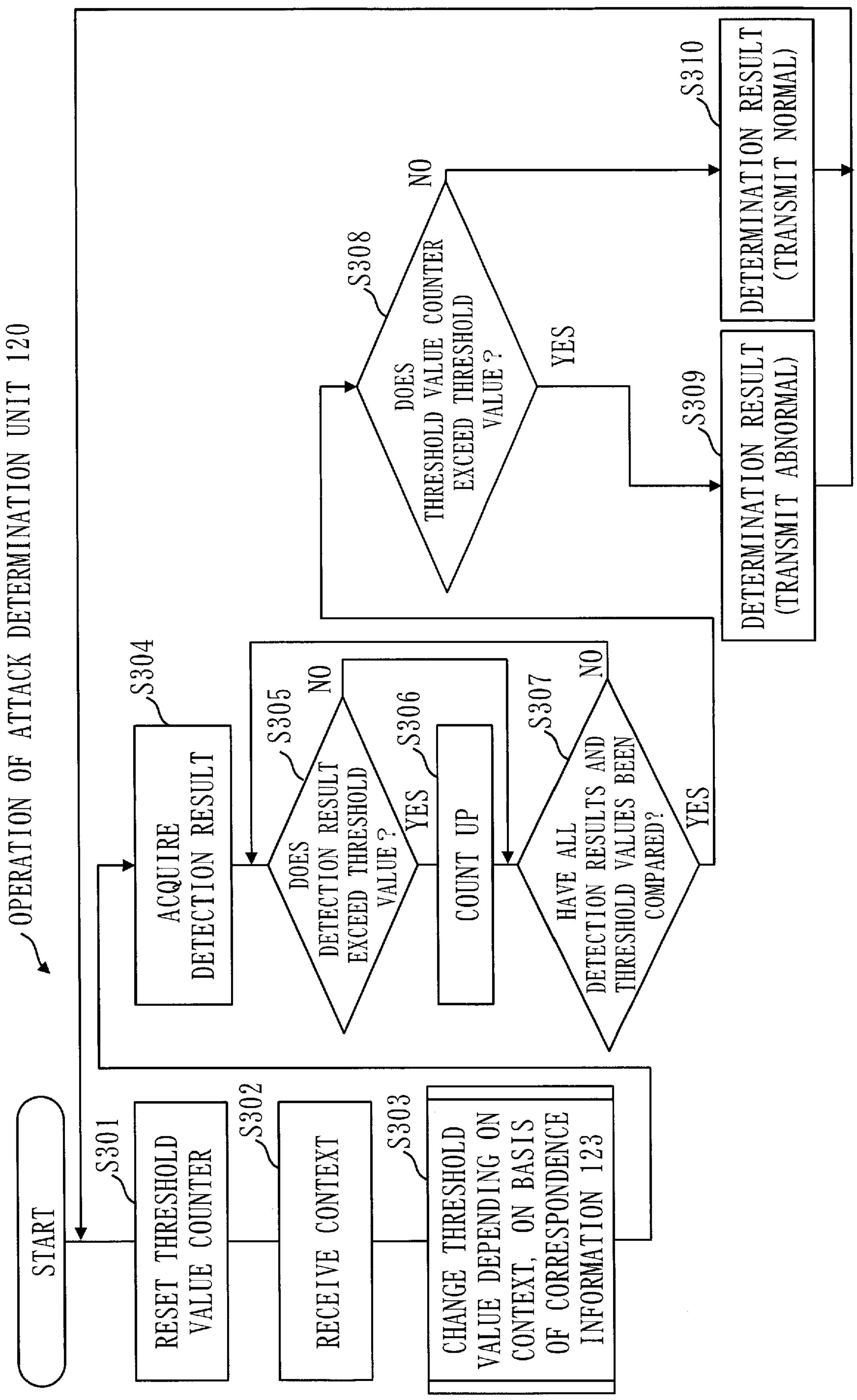
OPERATION OF ATTACK DETERMINATION UNIT 120
START
S301
RESET THRESHOLD VALUE COUNTER
S302
RECEIVE CONTEXT
S303
CHANGE THRESHOLD VALUE DEPENDING ON CONTEXT, ON BASIS OF CORRESPONDENCE INFORMATION 123
S304
ACQUIRE DETECTION RESULT
S305
DOES DETECTION RESULT EXCEED THRESHOLD VALUE ?
YES
NO
S306
COUNT UP
S307
HAVE ALL DETECTION RESULTS AND THRESHOLD VALUES BEEN COMPARED?
YES
NO
S308
DOES THRESHOLD VALUE COUNTER EXCEED THRESHOLD VALUE ?
YES
NO
S309
DETERMINATION RESULT (TRANSMIT ABNORMAL)
S310
DETERMINATION RESULT (TRANSMIT NORMAL)

# Fig. 16

123:CORRESPONDENCE INFORMATION

| CONTEXT | THRESHOLD VALUE CHANGE |
|---|---|
| ACCELERATION | DECREASE THRESHOLD VALUE OF PERIODIC CHANGE DETECTION UNIT 113 |
| DECELERATION | DECREASE THRESHOLD VALUE OF PERIODIC CHANGE DETECTION UNIT 113 |
| CONSTANT VELOCITY | INCREASE THRESHOLD VALUES OF PERIODIC CHANGE DETECTION UNIT 113 AND BIAS DETECTION UNIT 115 |
| STATIONARY | INCREASE THRESHOLD VALUE OF ABRUPT CHANGE DETECTION UNIT 114 |
| INDEFINITE | DECREASE THRESHOLD VALUES OF ALL DETECTION UNITS |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3239884 A1
- WO 2018055748 A1


### Non-patent literature cited in the description


- **SON, YUNMOK et al.** Rocking drones with intentional sound noise on gyroscopic sensors. *24th USENIX Security Symposium (USENIX Security 15),* 2015
- WALNUT: Waging doubt on the integrity of mems accelerometers with acoustic injection attacks. In Security and Privacy (EuroS&P). **TIMOTHY TRIPPEL ; OFIR WEISSE ; WENYUAN XU ; PETER HONEYMAN ; KEVIN FU.** 2017 IEEE European Symposium. IEEE, 2017, 3-18